(19) Europäisches Patentamt / European Patent Office / Office européen des brevets

(11) **EP 2 448 139 A2**

# EUROPEAN PATENT APPLICATION
published in accordance with Art. 153(4) EPC

(43) Date of publication:
**02.05.2012 Bulletin 2012/18**

(21) Application number: **10792332.8**

(22) Date of filing: **23.06.2010**

(51) Int Cl.:
**H04B 7/04** (2006.01)      **H04B 7/26** (2006.01)
**H04W 72/04** (2009.01)

(86) International application number:
**PCT/KR2010/004086**

(87) International publication number:
**WO 2010/151050 (29.12.2010 Gazette 2010/52)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **24.06.2009 KR 20090056707**

(71) Applicant: **Pantech Co., Ltd.**
**Seoul 121-270 (KR)**

(72) Inventors:
• **KWON, Kibum**
**Seoul, 121-270 (KR)**
• **YOON, Sungjun**
**Seoul, 121-270 (KR)**

(74) Representative: **Jordan, Volker Otto Wilhelm et al**
**Weickmann & Weickmann**
**Patentanwälte**
**Postfach 860 820**
**81635 München (DE)**

(54) **REFERENCE SIGNAL ALLOCATION METHOD FOR WIRELESS COMMUNICATION SYSTEM, APPARATUS FOR SAME, AND TRANSCEIVER DEVICE USING THE APPARATUS**

(57)    The present description relates to a reference signal which is required for frequency domain channel estimation on transmitting / receiving data between a terminal and a base station, performed by a receiver side, and more particularly, discloses an apparatus and a method for allocating a reference signal for acquiring channel state information. The apparatus and the method disclosed in the present specification divide cells using a code division multiplexing (CDM) method, divide multiple antenna layers using a frequency offset or a time offset, and allocate a reference signal for acquiring channel state information to a frame or a subframe in a wireless communication system including a base station and a terminal using multiple antennas.

FIG.7

**Description**

Technical Field

The present invention relates to a technology for a method of allocating a reference signal by a base station in a wireless communication system, and more particularly to an apparatus and a method for allocating a reference signal for obtaining channel state information.

Background Art

In general, a receiver side requires an estimation of a frequency domain channel for data transmission and reception between a terminal and a base station. For the estimation of the frequency domain channel, a particular signal or symbol may be inserted into a time-domain, a frequency-domain, or a two-dimensional domain grid including a frequency-time domain at regular intervals or irregular intervals.

The present specification describes a technology for Reference Signals (RSs) for estimating a frequency domain channel.

Disclosure

Technical Problem

An aspect of embodiments of the present invention is to provide a method and an apparatus for allocating a CSI-RS, which can distinguish cells in a frame or a subframe by a CDM (Code Division Multiplexing) and distinguish multiple antenna layers by using a frequency offset or a time offset.

Accordingly, it is characterized that the present invention uses a method, which can improve the accuracy of channel information of each of the multiple antenna layers and improve the CSI accuracy of each of the multiple antenna layers while securing the sufficient number of distinguishable cells in a structure where the number of distinguishable cells is highly limited according to the limitation of available resources.

Further, the present invention can efficiently reduce the high reception complexity, which may be generated by the CSI accuracy, through decreasing computation by using sequence characteristics or changing a resource allocation method.

Technical solution

In accordance with an aspect of the present invention, there is provided a method of allocating a CSI-RS for acquiring Channel State Information (CSI) in a multiple antenna system, the method including: differently generating CSI-Reference Signal (CSI-RS) sequences for a central cell or neighboring cells according to each cell; and allocating a CSI-RS of each cell based on the differently generated CSI-RS sequences according to each cell to different resource elements of a subframe including a combination of a frequency domain and a time domain according to two or more antenna layers.

According to another aspect of the present invention, there is provided a method of receiving a CSI-RS for acquiring CSI in a multiple antenna system, the method including: receiving information on a CSI-RS sequence for distinguishing each of a central cell or neighboring cells from a BS; and extracting a CSI-RS of each cell from different resource elements of a subframe including a combination of a time domain and a frequency domain according to two or more antenna layers by using the received information on the CSI-RS sequence.

According to another aspect of the present invention, there is provided a RS transmitting apparatus for allocating a CSI-RS for acquiring CSI in a multiple antenna system, the apparatus including: a CSI-RS sequence generator for differently generating CSI-Reference Signal (CRS-RS) sequences for a central cell or neighboring cells according to each cell; and a CSI-RS resource allocator for allocating a CSI-RS of each cell based on the differently generated CSI-RS sequences according to each cell to different resource elements of a subframe including a combination of a frequency domain and a time domain according to two or more antenna layers.

According to another aspect of the present invention, there is provided an apparatus for receiving a CSI-RS for acquiring CSI in a multiple antenna system, the apparatus including: a signal processor for receiving information on a CSI-RS sequence for distinguishing each of a central cell or neighboring cells from a BS; and a CSI-RS extractor for extracting a CSI-RS of each cell from different resource elements of a subframe including a combination of a time domain and a frequency domain according to two or more antenna layers by using the received information on the CSI-RS sequence.

Brief Description of the Drawings

The foregoing and other objects, features and advantages of the present invention will become more apparent from the following detailed description when taken in conjunction with the accompanying drawings in which:

FIG. 1 is a diagram illustrating a wireless communication system, to which embodiments of the present invention are applied.

FIG. 2 illustrates a structure of a frame or a subframe to which CSI-RSs are allocated when a base station uses 8 multiple antennas according to an embodiment of the present invention.

FIGs. 3 and 4 illustrate structures of a frame or a subframe to which CSI-RSs are allocated while maintaining the orthogonality of each of multiple antenna layers by TDM (Time Division Multiplexing)/FDM (Frequency Division Multiplexing) when a base station uses 8 multiple antennas according to another embodiment of the present invention.

FIGs. 5 and 6 illustrate structures of a frame or a subframe to which CSI-RSs are allocated when a base station uses 8 multiple antennas according to another embodiment of the present invention.

FIG. 7 illustrates a structure of a frame or a subframe to which CSI-RSs are allocated by TDM/FDM in order to distinguish multiple antenna layers and by a CDM in order to distinguish cells when a base station uses 8 multiple antennas according to another embodiment of the present invention.

FIGs. 8 to 11 illustrate structures of a frame or a subframe to which a CSI-RS for each of 4 cells is allocated.

FIG. 12 illustrates a structure of a frame and subframes including CSI-RSs according to an embodiment of the present invention.

FIG. 13 is a block diagram of an apparatus for generating CSI-RS sequences, to which embodiments of the present invention are applied, to allocate to resource elements.

FIG. 14 illustrates a structure of generating a signal of a downlink physical channel in a wireless communication system, to which embodiments of the present invention are applied.

FIG. 15 illustrates a structure of a receiver in a wireless communication system.

FIG. 16 illustrates a structure of a receiving apparatus for receiving CSI-RSs according to embodiments of the present invention.

Best Mode

Mode for Invention

Hereinafter, exemplary embodiments of the present invention will be described with reference to the accompanying drawings. In the following description, the same elements will be designated by the same reference numerals although they are shown in different drawings. Further, in the following description of the present invention, a detailed description of known functions and configurations incorporated herein will be omitted when it may make the subject matter of the present invention rather unclear.

In addition, terms, such as first, second, A, B, (a), (b) or the like may be used herein when describing components of the present invention. Each of these terminologies is not used to define an essence, order or sequence of a corresponding component but used merely to distinguish the corresponding component from other component(s). It should be noted that if it is described in the specification that one component is "connected," "coupled" or "joined" to another component, a third component may be "connected," "coupled," and "joined" between the first and second components, although the first component may be directly connected, coupled or joined to the second component.

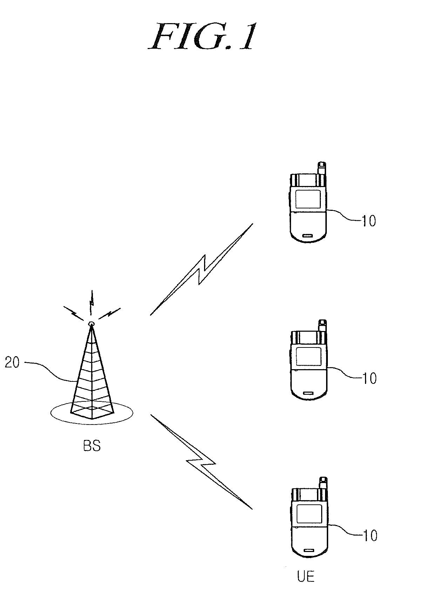

FIG. 1 is a diagram illustrating a wireless communication system, to which embodiments of the present invention are applied.

A wireless communication system is widely arranged to provide various communication services such as voice, packet data, etc.

Referring to FIG. 1, a wireless communication system includes a User Equipment (UE) 10 and a Base Station (BS) 20. The UE 10 and BS 20 transmit and receive resources between them.

According to the present invention, the UE 10 is a generic concept to refer to a user equipment in a wireless communication system as described above, and also should be interpreted as a concept including all of UEs in a WCDMA, an LTE, and an HSPA, a MS (Mobile Station) in a GSM, a UT (User Terminal), a SS (Subscriber Station), and a wireless device.

In general, the BS 20 or a cell refers to a fixed station for communicating with the UE 10, and may be referred to as other terms such as a node-B, an eNB (evolved Node-B), a BTS (Base Transceiver System), and an access point.

That is, in the present disclosure, the BS 20 or the cell should be interpreted as a generic meaning indicating a part covered by a BSC in a CDMA and by a NodeB in a WCDMA, and the BS 20 or the cell having the generic meaning includes various coverage areas such as a mega cell, a macro cell, a micro cell, a pico cell, and a femto cell.

In other words, the UE 10 and the BS 20 according to the present invention are used as a generic meaning, referring to transmitting/receiving subjects used to implement a technology or a technological idea described in the present disclosure, and they are not limited by a specifically designated term or word.

A multiple access scheme applied to a wireless communication system has no limitation, and the wireless communication system can use various multiple access schemes such as a CDMA (Code Division Multiple Access), an OFDM (Orthogonal Frequency Division Multiple Access), an OFDM-FDMA, an OFDM-TDMA, and an OFDM-CDMA.

A TDD (Time Division Duplex) scheme corresponding to a transmission using different times may be used for an uplink transmission and a downlink transmission, or a FDD (Frequency Division Duplex) scheme corresponding to a transmission using different frequencies may be used for an uplink transmission and a downlink transmission.

The following embodiments may be applied to a resource allocation of an asynchronous wireless communication field evolving into an LTE (Long Term Evolution) and an LTE-advanced via a GSM, a WCDMA, and an HSPA, and a synchronous wireless communication field evolving into a CDMA, a CDMA-2000, and a UMB. Such embodiments should not be interpreted as limited and restricted concepts to a specific wireless communication field, but should be interpreted as concepts including all technical fields, to which ideas of the present invention can be applied.

In order to transmit and receive signals between the UE 10 and the BS 20, a receiver side requires an estimation of a frequency domain channel. For example, the UE 10 requires an estimation of a downlink channel in a downlink transmission.

Particularly, the UE 10 requires an estimation of a complex channel of each subcarrier in an OFDM transmission, and the BS 20 requires an estimation of an uplink channel in an uplink transmission.

For the estimation of the frequency domain channel, a particular signal or symbol may be inserted into a two-dimensional domain grid at regular intervals or irregular intervals. At this time, the particular signal or symbol may be variously referred to as a reference signal, a reference symbol, or a pilot symbol. The present specification specifies the particular signal or symbol as a reference signal, but the present invention is not limited thereto.

Of course, the reference signal may be used for not only an estimation of a frequency domain channel but also a position estimation, a transmission/reception of control information, a transmission/reception of scheduling information, and a transmission/reception of feedback information required for a wireless communication process between a UE and a BS.

There are various types of reference signals in a downlink or an uplink transmission, and new reference signals are defined for various purposes. For example, the reference signal includes a DM-RS (Demodulation RS) and a SRS (Sounding RS) in an uplink transmission. The reference signal includes a CRS (Cell-specific RS), an MBSFN RS, and a UE-specific RS in a downlink transmission.

Further, the reference signal includes a CSI-RS transmitted by a BS in order to enable a UE 20 to obtain Channel State Information (CSI) on a central cell or neighboring cells in a downlink transmission.

The CSI-RS is used for reporting a Channel Quality Indicator (CQI), a Precoder Matrix Index (PMI), and a Rank Index (RI). The CSI-RS is a cell-specific reference signal, which makes cells included in a BS transmitting the CSI-RS distinguishable. Further, for low overhead, the CSI-RS should be sufficiently distributed to a frequency/time domain and then transmitted.

The present disclosure provides an algorithm for allocating sequences and efficiently selecting patterns of CSI-RSs for distinguishing cells and multiple antenna layers in consideration of external factors such as the number of antennas available in each of the BS 10 and the UE 20, an available bandwidth, and a CSI utilizing method. At this time, the present disclosure also provides a method of allocating sequences and selecting patterns of CSI-RSs, which can reduce the high complexity which may be generated due to distinguishing a plurality of cells.

Here, the CSI utilizing method may refer to different types utilizing a CSI by a specific difference of the wireless communication schemes between a case of utilizing the CSI in the communication scheme using one or more multiple antennas for wireless communication between one BS and one UE such as a SISO (Single Input Single Output) or a MIMO (Multiple Input Multiple Output) and a case of utilizing the CSI in the communication scheme using one or more multiple antennas for wireless communication between two or more BSs and one UE such as a CoMP (Cooperative Multi-Point).

For example, in the former case, the UE is satisfied if the UE secures only the CSI between one BS and the UE. Accordingly, it is possible to set a design method with easy pattern and sequence for receiving a signal of one BS. However, in the latter case, a different design method from the above method may be required since the UE should secure the CSI between a plurality of BSs and the UE.

Hereinafter, the present specification allocates CSI-RSs to frames or subframes such that multiple antenna layers are distinguished through applying a Code Division Multiplexing (CDM) and cells are distinguished by using a frequency offset or a time offset in a wireless communication system including the UE 20 and the BS 10 using multiple antennas.

Here, the antenna layers correspond to data layers, which can be logically transmitted to multiple antenna ports in a BS or a mobile communication terminal at the same time. However, data of respective antenna layers may be the same or different. Accordingly, the number of antenna layers may be smaller than or the same as the number of antenna ports. The antenna port refers to an antenna physically constructed in the BS or the mobile communication terminal. Hereinafter, the present specification includes an assumption that CSI-RS patterns for two concepts of the antenna layer and the antenna port may be distinguished.

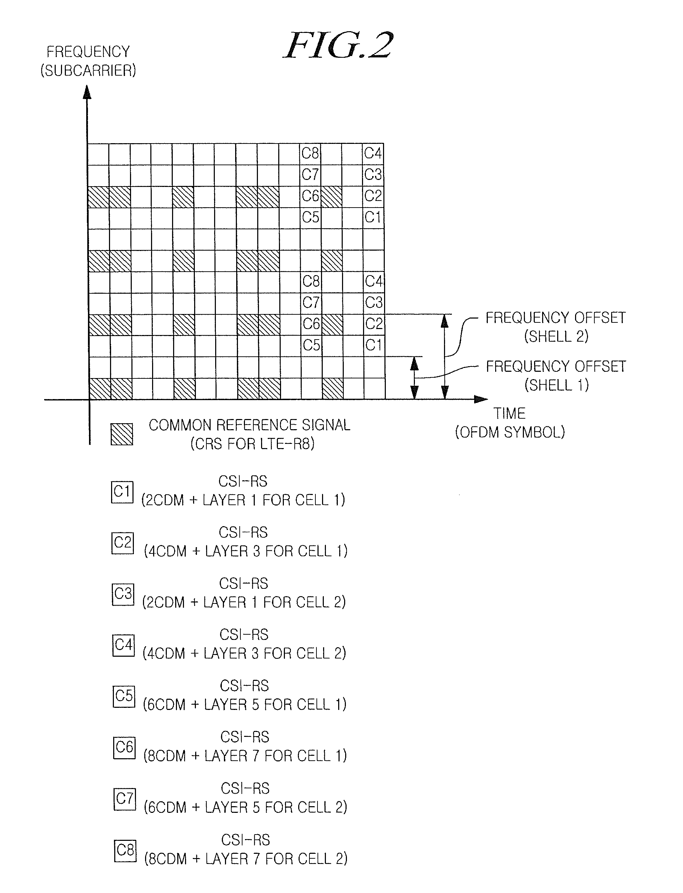

FIG. 2 illustrates a structure of a frame or a subframe to which CSI-RSs are allocated according to an example where a BS uses 8 multiple antennas.

Referring to FIG. 2, the subframe includes the CSI-RS used for reporting a CRS (Cell-specific RS) and CQI/PMI/RI used for a channel estimation for a demodulation of a downlink transmission.

In FIG. 2, shaded blocks refer to blocks to which CRSs are allocated, C1, C2, C5, and C6 are blocks to which CRS-RSs for multiple antenna layers 1, 3, 5, and 7 for cell 1 are allocated, and C3, C4, C7, and, C8 are blocks to which CRS-RSs for multiple antenna layers 2, 3, 5, and 7 for cell 2 are allocated.

As shown in FIG. 2, the BS 10 using multiple antennas allocates CSI-RSs to frames or subframes to distinguish multiple antenna layers, and uses frequency offsets or time offsets to distinguish cells.

However, the aforementioned method of allocating CSI-RSs to frames or subframes uses a CDM to distinguish each of multiple antenna layers and uses a frequency/time offset scheme capable of increasing the accuracy to distinguish cells. At this time, the number of distinguishable cells is highly limited according to the limitation of available resources.

Further, the wireless communication system including the UE 20 and the BS 10 using multiple antennas can distinguish multiple antenna layers by allocating CSI-RSs to frames or subframes by a CDM scheme or distinguish multiple antenna layers by orthogonally allocating CSI-RSs to frames or subframes by a TDM/FDM scheme for each of the multiple antenna layers.

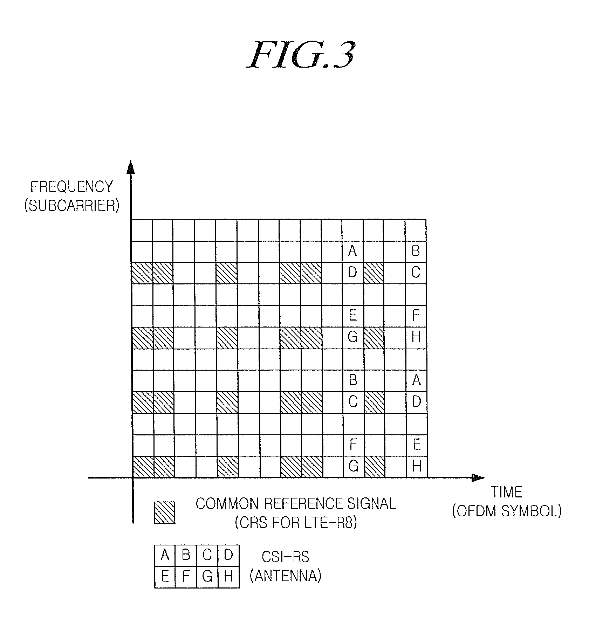

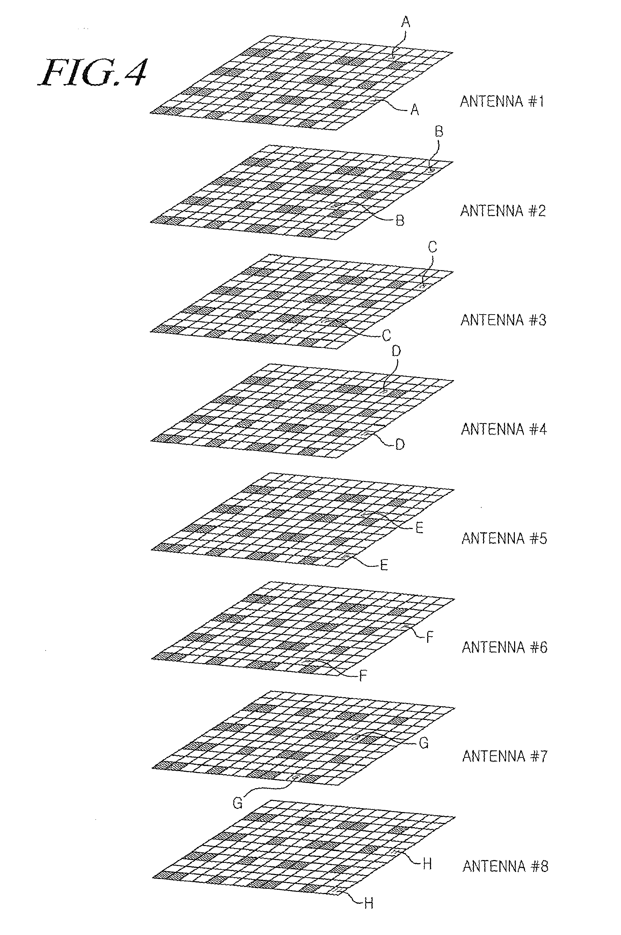

FIGs. 3 and 4 illustrate structures of a frame or a subframe to which CSI-RSs are orthogonally allocated for each of multiple antenna layers by a TDM/FDM scheme when a BS uses 8 multiple antennas.

Referring to FIGs. 3 and 4, subframes include CSI-RSs orthogonally allocated for each of multiple antenna layers by the TDM/FDM scheme. In FIGs . 3 and 4, shaded blocks refer to blocks to which CRSs are allocated, and blocks filled with different colors (blocks A to H of FIGs. 3 and 4) refer to blocks to which CSI-RSs are orthogonally allocated for each of multiple antenna layers.

Specifically, as shown in FIGs. 3 and 4, in a case where the BS uses 8 multiple antennas, respective antennas are allocated to resource blocks with different patterns in a two-dimensional subframe structure including a frequency and a symbol and then transmits CSI-RSs. A receiving apparatus such as the UE 20 can distinguish antennas of the BS, which transmits CSI-RSs, through patterns of the CSI-RSs.

At this time, CSI-RSs transmitted from different antenna ports are orthogonal to each other in an OFDM system for division multiplexing the CSI-RSs by using orthogonal subcarriers because the CSI-RSs have been allocated to the resources blocks with different patterns from each other. That is, since the BS 10 uses 8 multiple antennas, 8 blocks located in different positions exist in a frame or a subframe.

FIGs . 5 and 6 illustrate structures of a frame or a subframe to which CSI-RSs are allocated by a CDM according to another example where a BS uses 8 multiple antennas.

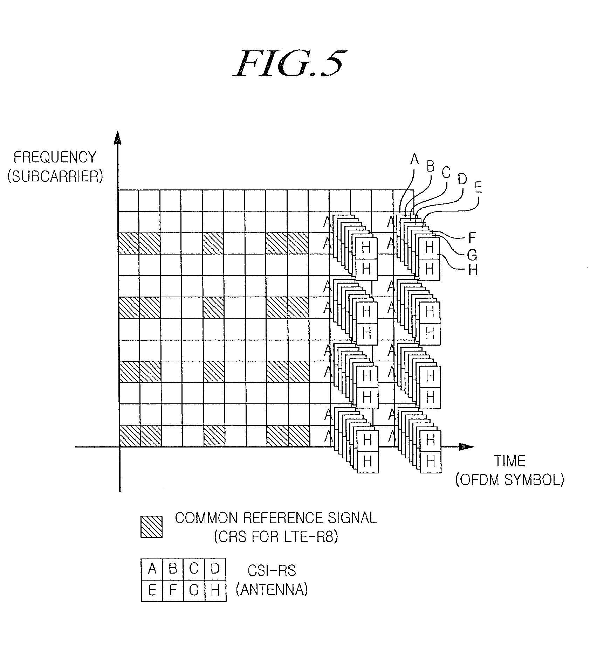

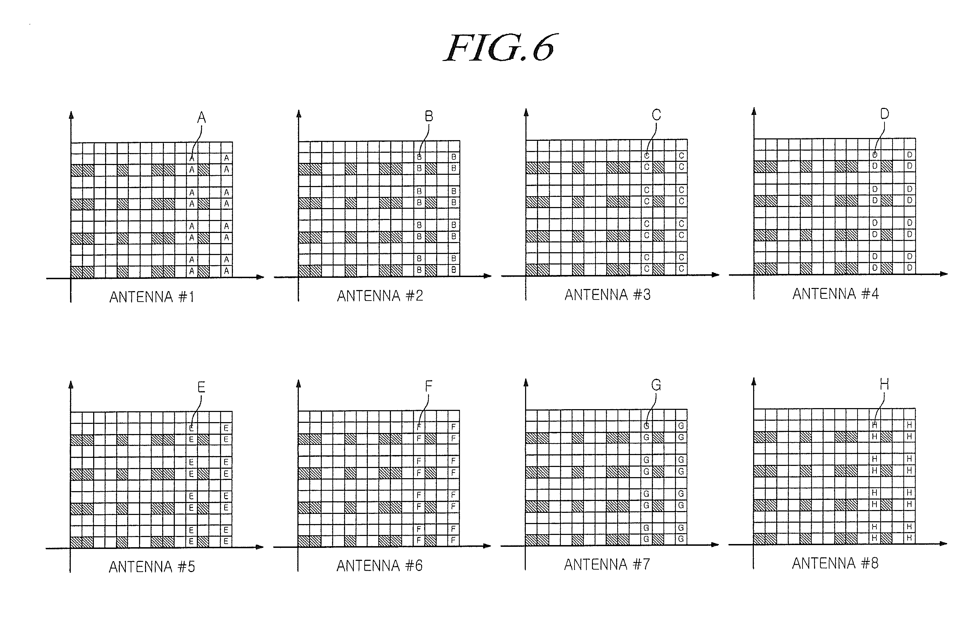

Referring to FIGs. 5 and 6, the subframe includes CSI-RSs allocated by a CDM scheme. In FIGs. 5 and 6, shaded blocks refer to blocks to which CRSs are allocated, and blocks (blocks A to H of FIGs. 5 and 6) indicated by different letters refer to resource elements to which CSI-RSs are allocated by a CDM scheme.

The BS 10 uses 8 multiple antennas, so that the blocks (blocks A to H of FIGs. 5 and 6) to which the CSI-RSs are allocated are indicated by different letters.

Specifically, as shown in FIG. 6, when the BS 10 uses 8 multiple antennas, each of the antennas transmits CSI-RSs allocated to resource blocks in the same pattern in a two-dimensional subframe structure including a frequency and a symbol. However, at this time, the BS 10 multiplexes CSI-RSs transmitted by multiple antennas by using different codes.

A receiving apparatus such as the UE 20 cannot distinguish the antennas of the BS transmitting the CSI-RSs through CSI-RS patterns, but can distinguish the antennas transmitting the CSI-RSs by performing a demultiplexing using codes used by each of the antennas.

Meanwhile, a method of allocating CSI-RSs to a frame or a subframe in FIGs. 3 to 6 describes a way of distinguishing multiple antenna layers by each of CDM and TDM/FDM schemes. In this connection, the present invention provides a specific method of increasing the CSI accuracy of each of multiple antenna layers based on a fact that the requirement accuracy of the CSI of the multiple antenna layers is higher than the requirement accuracy of information for distinguishing cells.

Meanwhile, a method of allocating CSI-RSs to a frame or a subframe in FIGs. 2 to 4 has limitations in that the number of distinguishable cells is highly limited according to a limitation of available resources or a part for distinguishing cells may not be provided.

Accordingly, the present specification proposes a method of allocating CSI-RSs to a frame or a subframe, which can improve the CSI-RS capability when using a CDM scheme to distinguish cells and a TDM/FDM scheme to distinguish multiple antenna layers, as a method for increasing the CSI accuracy of each of the multiple antenna layers while sufficiently securing the number of distinguishable cells.

Such a present specification can provide an advantage of minimizing an exponential increase of the complexity in a CSI measurement for an unspecific cell through the CSI-RS according to an increase of the number of distinguishable cells.

That is, the method of allocating CSI-RSs to a new frame or subframe according to the present invention distinguishes cells by a CDM scheme and multiple antenna layers by a TDM/FDM scheme. Accordingly, the present invention provides an advantage of minimizing the complexity for the unspecific cell in the CSI measurement through the CSI-RS and increasing the number of distinguishable cells.

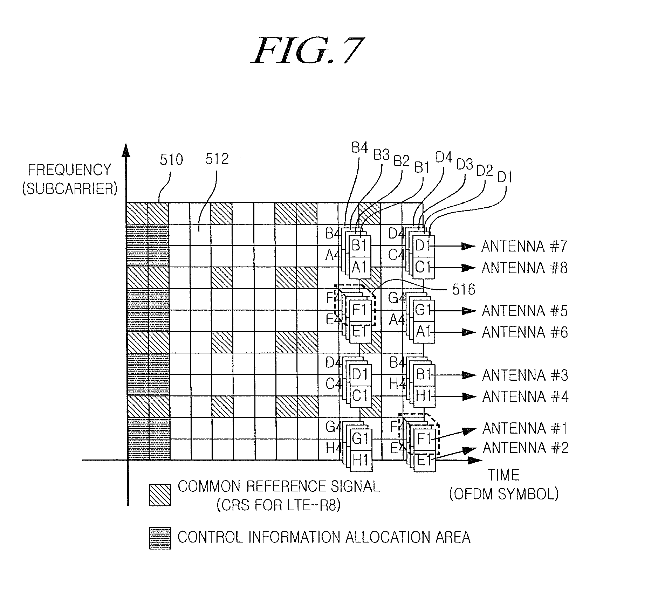

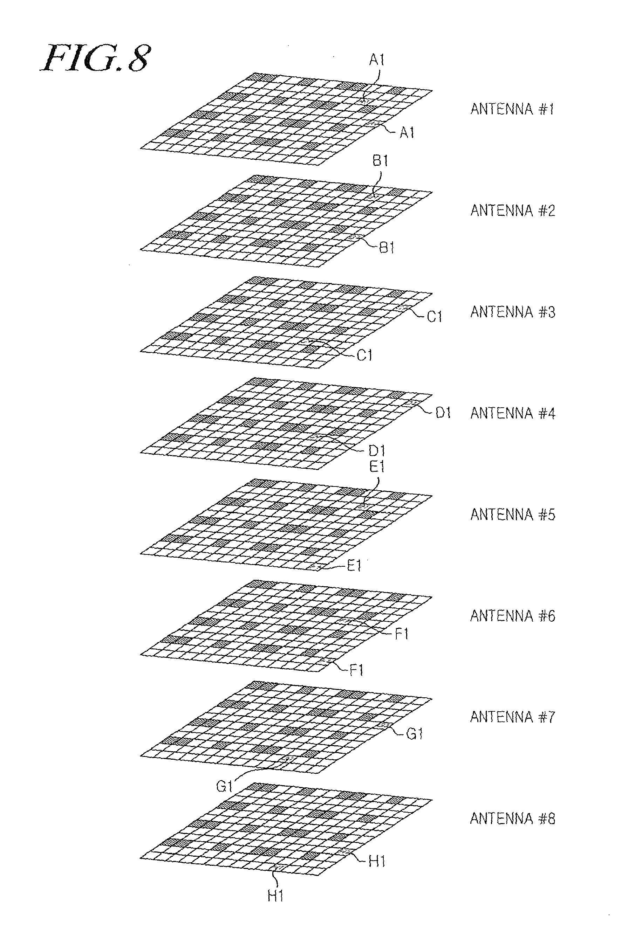

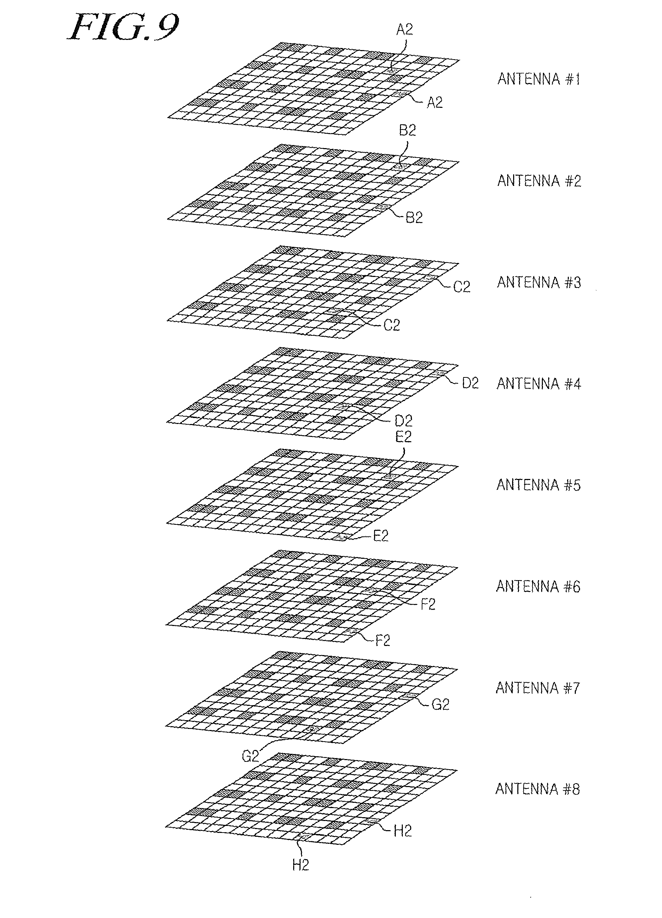

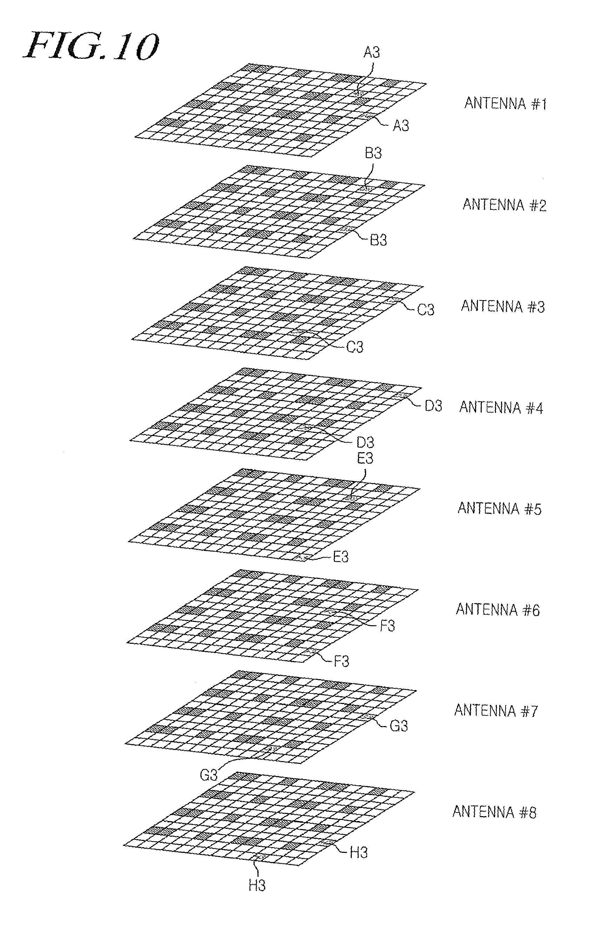

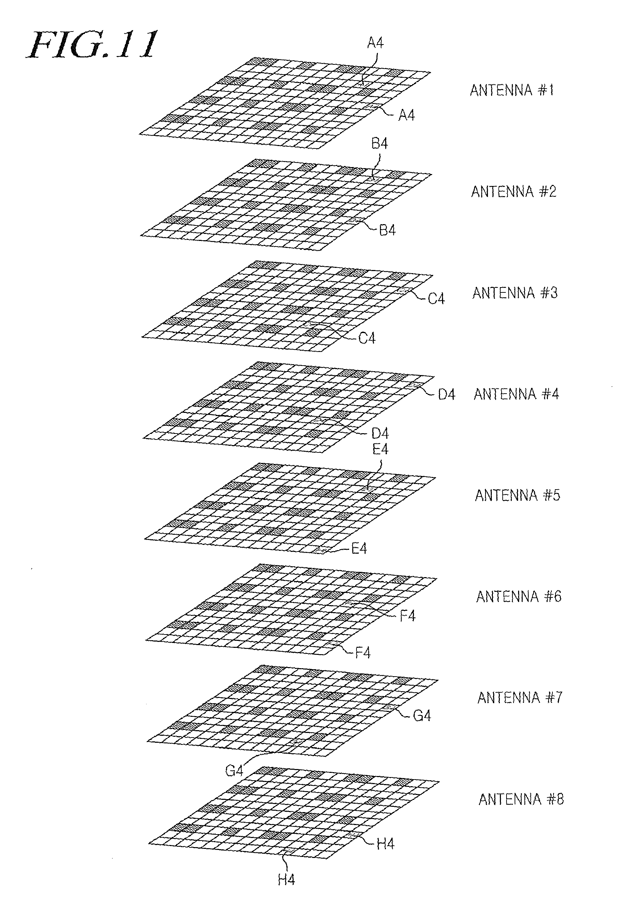

FIG. 7 illustrates a structure of a frame or a subframe to which CSI-RSs are allocated by TDM/FDM in order to distinguish multiple antenna layers and by a CDM in order to distinguish cells when a BS uses 8 multiple antennas. Further, FIGs. 8 to 11 illustrate structures of a frame or a subframe to which a CSI-RS for each of 4 cells is allocated.

First, one resource block in a normal frame subframe structure is illustrated in FIG. 7. Here, one subframe consists of 50 resources blocks on a frequency axis, and one frame (one radio frame) consists of 10 subframes.

Each of the resource blocks includes resource elements, which is a unit of resources including symbols on a time domain and subcarriers on a frequency domain. In FIG. 7, one resource element is represented by one small square 512.

Each of the resource blocks includes a control information area and resource elements to which CRSs are allocated in a predetermined pattern. Here, the control information area is an area of a subframe to which control signals of a physical layer and its higher layer L1/L2 are transmitted. In general, the control information area 510 occupies the first 1 to 3 symbols of a subframe. The present specification defines, for example, the first two symbols as control information areas.

Accordingly, CSI-RSs are allocated to resource elements of a resource block except the control information area 510 and resource elements to which CRSs are allocated.

Hereinafter, a method of distinguishing multiple antenna layers by a TDM/FDM scheme and a method of distinguishing cells by a CDM scheme will be described.

In order to distinguish multiple antenna layers, CSI-RSs are allocated to resource blocks divisibly on a time domain and a frequency domain in a specific pattern for each of antenna layers. At this time, the antenna layer is a logical unit grouping parts of multiple antenna ports (antennas #1 to #8) of a BS, which are physical elements, as one layer.

For example, a BS using 8 multiple antennas groups 2 antenna ports (for example, antennas #1 and #2, antennas #3 and #4, antennas #5 and #6, or antennas #7 and #8) as one antenna layer, and can allocate CSI-RSs to resource blocks in the same antenna layer with the same specific pattern. In this case, two antenna ports forming one antenna layer transmit CSI-RSs allocated to a resource block in the same pattern.

The antenna layer is distinguished from an antenna layer having a different spatial resource and a mapping of data of which frequency/time resources are logically distinguished is defined in the layer.

The antenna port refers to a physically distinguishable antenna, which is installed in a BS or a UE.

Hereinafter, although the present specification illustratively assumes that each of the antenna ports is included in one antenna layer, two or more antenna ports may be equally or unequally grouped to form one antenna layer.

Referring to FIGs. 8 to 11, CSI-RSs for distinguishing a first antenna port (antenna #1) among 8 antenna ports (antennas #1 to #8) are allocated to resource elements indicated by a "A" group (A1 to A4) based on one resource block. In the same manner, CSI-RSs for distinguishing second to eighth antenna ports (antennas #2 to #8) are allocated to resource elements indicated by a "B" group (B1 to B4) to a "H" group (H1 to H4).

CSI-RSs may be allocated to different resource elements except a control information area of a subframe and resource elements to which different reference signals are allocated. Meanwhile, other reference signals, for example, may include a DM-RS (DeModulation RS) and an SRS (Sounding RS) in an uplink transmission, and a CRS (Cell-specific RS), an MBSFN RS, and a UE-specific RS in a downlink transmission.

For example, CSI-RSs are allocated to resource elements except control information areas of the first two symbols and resource elements to which CRSs are allocated with a specific pattern in a subframe. When control areas are allocated to three symbols, the CSI-RSs may be allocated to the remaining resource elements except resource elements to which CRSs are allocated with a specific pattern, among the remaining 11 symbols.

Specifically, as shown in FIG. 8, when the BS 10 uses 8 multiple antennas (antennas #1 to #8), the BS 10 allocates CSI-RSs to resource blocks in different patterns for each of antennas in a two-dimensional subframe structure including a frequency and a symbol, and transmits the allocated CSI-RSs through corresponding antennas.

Accordingly, a receiving apparatus such as the UE 20 can distinguish antennas (antennas #1 to #8) of the BS having transmitted CSI-RSs through patterns of the CSI-RSs. At this time, as shown in FIG. 8, BSs (cells 1 to 4) can know that CSI-RSs are allocated for the same antenna in the same pattern.

Of course, in other resource blocks, CSI-RSs for distinguishing antenna ports may be allocated to resource elements in the same way as the above description. At this time, in other resource blocks, CSI-RSs may be allocated to resource elements in a different way from the above description. That is, CSI-RSs may be allocated to a plurality of resource blocks included in one subframe in the same pattern, or CSI-RSs may be allocated to a part or all of the resource blocks in different patterns.

Accordingly, it is possible to distinguish multiple antenna layers according to positions of resource elements to which CSI-RSs are allocated, and also distinguish cells through different sequences of CES-RSs allocated to the same resource elements.

Hereinafter, a method of distinguishing cells by a CDM will be described.

In the present specification, CSI-RSs allocated to resource elements to distinguish antenna ports (antennas #1 to #8) can use different sequences to distinguish cells (cell 1 to cell 4). In FIG. 7 and FIGs. 8 to 11, CSI-RSs allocated to resource elements to distinguish antenna ports (antennas #1 to #8) can use different sequences for each cell for the same resource elements.

For example, cell 1 can allocate CSI-RSs using sequence (1, 1) to resource elements, cell 2 can allocate CSI-RSs using sequence (1, -1) to resource elements, cell 3 can allocated CSI-RSs using (-1, -1) to resource elements, and cell 4 can allocate CSI-RSs using sequence (-1, 1) to resource elements. Specifically, cells 1 to 4 can use different sequences (for example, (1, 1), sequence (1, -1), sequence (-1, -1), and sequence (-1, 1)) to multiplex the CSI-RSs and allocate the CSI-RSs to resource elements. Of course, sequences used for an encoding of the CSI-RS correspond to a simple example for the convenience of descriptions.

In FIG. 7 and FIGs. 8 to 11, although 4 cells (cell 1 to cell 4) are illustratively discribed, the number of cells is not limited thereto. At this time, a sequence length for distinguishing a basic cell may be calculated by equation (1).

$$Seq\_length\_Basic = NumLayerRSperRB * NumTxAntenna * NRB \quad \ldots\ldots\ldots\ldots (1)$$

In equation (1), *Seq_length_Basic* denotes a sequence length for distinguishing a basic cell, *NumLayerRSperRB* denotes the number of RSs for each multiple antenna layer allocated to each resource block of a plurality of Resource Blocks (RB) included in a subframe, *NumTxAntenna* denotes the number of antennas of the BS, and NRB denotes the number of RBs to which CSI-RSs are allocated.

Referring to FIG. 5, it can be shown that a sequence length for distinguishing a basic cell is 32 (*Seq_length_Basic* = 32) from *NumLayerRSperRB* = 2, *NumTxAntenna* = 8, *NRB* = 2.

Meanwhile, a sequence for distinguishing a basic cell, that is, a sequence *Seq_length_Basic(n)* having a length of *NumLayerRSperRB* * NumTxAntenna * *NRB* may be defined by equation (2).

$$eq\_length\_Basic(n) = \{s(n,0), s(n,1), \ldots, s(n, NumLayerRSperRB * NumTxAntenna * NRB) \quad \ldots\ldots\ldots (2)$$

In equation (2), n=0, 1, ...*NumLayerRSperRB * NumTxAntenna* NRB* - 1. Specifically, if *NumLayerRSperRB* * NumTxAntenna* NRB=32, Seq_length_Basic*(0) = {s(0,0), s(0,1), ... , s(0, 32)}, *Seq_length_Basic*(1) = {s(1,0), s (1,1), ... , s(1, 32)}, ... , *seq_length_Basic*(31) == {s(31,0), s(31,1), ... , s(31, 32)}.

When cells (cell 1 to cell 4) are distinguished through different sequences of CSI-RSs allocated to the same resource elements, CSI-RSs allocated to specific resource elements do not use sequences for distinguishing a basic cell described above, but can use a shorter sequence to distinguish cells.

Referring to FIG. 7 and FIGs. 8 to 11, CSI-RSs allocated to resource elements for distinguishing a third antenna port (antenna #3) do not use the aforementioned sequences for distinguishing the basic cell, but can use a short sequence for distinguishing simple cells.

For example, when intensities of signals received from a specific cell are larger than intensities of signals received from neighboring cells such that the signals received from the specific cell can be distinguished, CSI-RSs do not use long sequences for distinguishing the basic cell to distinguish cells, but use shorter sequences for distinguishing simple cells to distinguish cells according to the present disclosure. Accordingly, calculation for distinguishing CSI-RSs of the receiving apparatus may be reduced.

Hereinafter, a method of simply distinguishing cells by using a shorter sequence than a sequence for distinguishing basic cells will be described.

According to the present specification, a length of a sequence for distinguishing simple cells may be calculated by equation (3) below.

$$Seq\_length\_Simple = NumLayerRSperRB * NRB \quad .... \quad (3)$$

In equation (3), *Seq_length_Simple* denotes a length of a sequence for distinguishing a simple cell and *NumLayerRSperRB* and *NRB* mean the same in as equation (1).

Referring to FIG. 7, it can be shown that a length of a sequence 516 for distinguishing a simple cell is 4 (*Seq_length_Basic* = 4) from *NumLayerRSperRB* = 2, *NRB* = 2.

The *NumLayerRSperRB * NRB* number of sequences are selected through a rule defined in the number *NumLayerRSperRB * NumTxAntenna * NRB* of sequences (sequences for distinguishing basic cells) or a random manner, and one element among elements of each sequence are selected randomly or through a rule defined in the selected sequences, so that sequence *Seq_length_Simple* (sequence for distinguishing simple cells) may be constructed.

Specifically, according to a rule defined in sequences, which has a length of 32, for distinguishing a basic cell or a random manner, sequences, which have a length of 4, for distinguishing a simple cell may be selected.

In this case, elements of the *NumLayerRSperRB * NRB* number of sequences should be able to construct different *Seq_length_Simple* sequences, and characteristics between *Seq_length_Basic* sequences and characteristics between *Seq_length_Simple* sequences should be the same. For example, the characteristics between the sequences include an auto-correlation characteristic or a cross-correlation characteristic. The auto-correlation characteristic refers to a correlation between elements (values of a process generated at a certain time) in one certain sequence (process). Further, the cross-correlation characteristic refers to a correlation between elements (values of a process generated at a certain time) in two different sequences (processes). In general, a convolution calculation is used for expressing values of the auto-correlation and the cross-correlation. The same characteristics of two different sequences mean that the auto-correlation characteristics are the same. For a sequence (signal) set including a plurality of sequences (signals), the auto-correlation characteristics refer to characteristics indicating how easily each sequence (signal) of the set is distinguished from its time-shifted version. The cross-correlation characteristics refer to characteristics indicating how easily each sequence of the set is distinguished from possible time-shifted version of all other sequences (signals). The correlation characteristics may be represented by a correlation value expressed as a value by a convolution calculation between the sequences (signals). For the auto-correlation, an auto-correlation value not having a time-shift of "0" is smaller than an auto-correlation value having a time-shift of "0", and the auto-correlation characteristics may be better (they can be more easily distinguished) as the number of values is smaller. Further, for the cross-correlation, a cross-correlation value of two sequences (signals) in a sequence (signal) set is smaller than an auto-correlation value having a time-shift of "0". The cross-correlation characteristics may be better (they can be more easily distinguished) as the number of values is smaller. Further, when the number of correlation values and ratios of correlation values for auto-correlation values having a time-shift of "0" are the same, the correlation characteristics of the sequences (signals) may be the same.

One of sequences satisfying the auto-correlation characteristics and the cross-correlation characteristics includes a DFT (Discrete Fourier Transform) sequence as an example.

For example, in a DFT sequence matrix having a length of 16, a process of generating a DFT sequence matrix having a length of 4 is as follows. Sequences for distinguishing a basic cell may be represented by equation (4) below.

$$DFT\_seq_{k,n} \cong e^{\frac{-j \cdot 2\pi \cdot k \cdot n}{N}} \quad .... \quad (4)$$

In equation (4), N denotes a length of a DFT sequence, k denotes an index number of a row, and n denotes an index number of a column.

For example, if $N = 16$, $k = 0$ to 15, and $n = 0$ to 15, a matrix form of equation (4) corresponds to table 1. Hereinafter, $2\pi$ is omitted in table 1.

[Table 1]

| | | | | | | | | | | | | | | | |
|---|---|---|---|---|---|---|---|---|---|---|---|---|---|---|---|
| $e^{\frac{-j\cdot0\cdot0}{16}}$ | $e^{\frac{-j\cdot0\cdot1}{16}}$ | $e^{\frac{-j\cdot0\cdot2}{16}}$ | $e^{\frac{-j\cdot0\cdot3}{16}}$ | $e^{\frac{-j\cdot0\cdot4}{16}}$ | $e^{\frac{-j\cdot0\cdot5}{16}}$ | $e^{\frac{-j\cdot0\cdot6}{16}}$ | $e^{\frac{-j\cdot0\cdot7}{16}}$ | $e^{\frac{-j\cdot0\cdot8}{16}}$ | $e^{\frac{-j\cdot0\cdot9}{16}}$ | $e^{\frac{-j\cdot0\cdot10}{16}}$ | $e^{\frac{-j\cdot0\cdot11}{16}}$ | $e^{\frac{-j\cdot0\cdot12}{16}}$ | $e^{\frac{-j\cdot0\cdot13}{16}}$ | $e^{\frac{-j\cdot0\cdot14}{16}}$ | $e^{\frac{-j\cdot0\cdot15}{16}}$ |
| $e^{\frac{-j\cdot1\cdot0}{16}}$ | $e^{\frac{-j\cdot1\cdot1}{16}}$ | $e^{\frac{-j\cdot1\cdot2}{16}}$ | $e^{\frac{-j\cdot1\cdot3}{16}}$ | $e^{\frac{-j\cdot1\cdot4}{16}}$ | $e^{\frac{-j\cdot1\cdot5}{16}}$ | $e^{\frac{-j\cdot1\cdot6}{16}}$ | $e^{\frac{-j\cdot1\cdot7}{16}}$ | $e^{\frac{-j\cdot1\cdot8}{16}}$ | $e^{\frac{-j\cdot1\cdot9}{16}}$ | $e^{\frac{-j\cdot1\cdot10}{16}}$ | $e^{\frac{-j\cdot1\cdot11}{16}}$ | $e^{\frac{-j\cdot1\cdot12}{16}}$ | $e^{\frac{-j\cdot1\cdot13}{16}}$ | $e^{\frac{-j\cdot1\cdot14}{16}}$ | $e^{\frac{-j\cdot1\cdot15}{16}}$ |
| $e^{\frac{-j\cdot2\cdot0}{16}}$ | $e^{\frac{-j\cdot2\cdot1}{16}}$ | $e^{\frac{-j\cdot2\cdot2}{16}}$ | $e^{\frac{-j\cdot2\cdot3}{16}}$ | $e^{\frac{-j\cdot2\cdot4}{16}}$ | $e^{\frac{-j\cdot2\cdot5}{16}}$ | $e^{\frac{-j\cdot2\cdot6}{16}}$ | $e^{\frac{-j\cdot2\cdot7}{16}}$ | $e^{\frac{-j\cdot2\cdot8}{16}}$ | $e^{\frac{-j\cdot2\cdot9}{16}}$ | $e^{\frac{-j\cdot2\cdot10}{16}}$ | $e^{\frac{-j\cdot2\cdot11}{16}}$ | $e^{\frac{-j\cdot2\cdot12}{16}}$ | $e^{\frac{-j\cdot2\cdot13}{16}}$ | $e^{\frac{-j\cdot2\cdot14}{16}}$ | $e^{\frac{-j\cdot2\cdot15}{16}}$ |
| $e^{\frac{-j\cdot3\cdot0}{16}}$ | $e^{\frac{-j\cdot3\cdot1}{16}}$ | $e^{\frac{-j\cdot3\cdot2}{16}}$ | $e^{\frac{-j\cdot3\cdot3}{16}}$ | $e^{\frac{-j\cdot3\cdot4}{16}}$ | $e^{\frac{-j\cdot3\cdot5}{16}}$ | $e^{\frac{-j\cdot3\cdot6}{16}}$ | $e^{\frac{-j\cdot3\cdot7}{16}}$ | $e^{\frac{-j\cdot3\cdot8}{16}}$ | $e^{\frac{-j\cdot3\cdot9}{16}}$ | $e^{\frac{-j\cdot3\cdot10}{16}}$ | $e^{\frac{-j\cdot3\cdot11}{16}}$ | $e^{\frac{-j\cdot3\cdot12}{16}}$ | $e^{\frac{-j\cdot3\cdot13}{16}}$ | $e^{\frac{-j\cdot3\cdot14}{16}}$ | $e^{\frac{-j\cdot3\cdot15}{16}}$ |
| $e^{\frac{-j\cdot4\cdot0}{16}}$ | $e^{\frac{-j\cdot4\cdot1}{16}}$ | $e^{\frac{-j\cdot4\cdot2}{16}}$ | $e^{\frac{-j\cdot4\cdot3}{16}}$ | $e^{\frac{-j\cdot4\cdot4}{16}}$ | $e^{\frac{-j\cdot4\cdot5}{16}}$ | $e^{\frac{-j\cdot4\cdot6}{16}}$ | $e^{\frac{-j\cdot4\cdot7}{16}}$ | $e^{\frac{-j\cdot4\cdot8}{16}}$ | $e^{\frac{-j\cdot4\cdot9}{16}}$ | $e^{\frac{-j\cdot4\cdot10}{16}}$ | $e^{\frac{-j\cdot4\cdot11}{16}}$ | $e^{\frac{-j\cdot4\cdot12}{16}}$ | $e^{\frac{-j\cdot4\cdot13}{16}}$ | $e^{\frac{-j\cdot4\cdot14}{16}}$ | $e^{\frac{-j\cdot4\cdot15}{16}}$ |
| $e^{\frac{-j\cdot5\cdot0}{16}}$ | $e^{\frac{-j\cdot5\cdot1}{16}}$ | $e^{\frac{-j\cdot5\cdot2}{16}}$ | $e^{\frac{-j\cdot5\cdot3}{16}}$ | $e^{\frac{-j\cdot5\cdot4}{16}}$ | $e^{\frac{-j\cdot5\cdot5}{16}}$ | $e^{\frac{-j\cdot5\cdot6}{16}}$ | $e^{\frac{-j\cdot5\cdot7}{16}}$ | $e^{\frac{-j\cdot5\cdot8}{16}}$ | $e^{\frac{-j\cdot5\cdot9}{16}}$ | $e^{\frac{-j\cdot5\cdot10}{16}}$ | $e^{\frac{-j\cdot5\cdot11}{16}}$ | $e^{\frac{-j\cdot5\cdot12}{16}}$ | $e^{\frac{-j\cdot5\cdot13}{16}}$ | $e^{\frac{-j\cdot5\cdot14}{16}}$ | $e^{\frac{-j\cdot5\cdot15}{16}}$ |
| $e^{\frac{-j\cdot6\cdot0}{16}}$ | $e^{\frac{-j\cdot6\cdot1}{16}}$ | $e^{\frac{-j\cdot6\cdot2}{16}}$ | $e^{\frac{-j\cdot6\cdot3}{16}}$ | $e^{\frac{-j\cdot6\cdot4}{16}}$ | $e^{\frac{-j\cdot6\cdot5}{16}}$ | $e^{\frac{-j\cdot6\cdot6}{16}}$ | $e^{\frac{-j\cdot6\cdot7}{16}}$ | $e^{\frac{-j\cdot6\cdot8}{16}}$ | $e^{\frac{-j\cdot6\cdot9}{16}}$ | $e^{\frac{-j\cdot6\cdot10}{16}}$ | $e^{\frac{-j\cdot6\cdot11}{16}}$ | $e^{\frac{-j\cdot6\cdot12}{16}}$ | $e^{\frac{-j\cdot6\cdot13}{16}}$ | $e^{\frac{-j\cdot6\cdot14}{16}}$ | $e^{\frac{-j\cdot6\cdot15}{16}}$ |
| $e^{\frac{-j\cdot7\cdot0}{16}}$ | $e^{\frac{-j\cdot7\cdot1}{16}}$ | $e^{\frac{-j\cdot7\cdot2}{16}}$ | $e^{\frac{-j\cdot7\cdot3}{16}}$ | $e^{\frac{-j\cdot7\cdot4}{16}}$ | $e^{\frac{-j\cdot7\cdot5}{16}}$ | $e^{\frac{-j\cdot7\cdot6}{16}}$ | $e^{\frac{-j\cdot7\cdot7}{16}}$ | $e^{\frac{-j\cdot7\cdot8}{16}}$ | $e^{\frac{-j\cdot7\cdot9}{16}}$ | $e^{\frac{-j\cdot7\cdot10}{16}}$ | $e^{\frac{-j\cdot7\cdot11}{16}}$ | $e^{\frac{-j\cdot7\cdot12}{16}}$ | $e^{\frac{-j\cdot7\cdot13}{16}}$ | $e^{\frac{-j\cdot7\cdot14}{16}}$ | $e^{\frac{-j\cdot7\cdot15}{16}}$ |
| $e^{\frac{-j\cdot8\cdot0}{16}}$ | $e^{\frac{-j\cdot8\cdot1}{16}}$ | $e^{\frac{-j\cdot8\cdot2}{16}}$ | $e^{\frac{-j\cdot8\cdot3}{16}}$ | $e^{\frac{-j\cdot8\cdot4}{16}}$ | $e^{\frac{-j\cdot8\cdot5}{16}}$ | $e^{\frac{-j\cdot8\cdot6}{16}}$ | $e^{\frac{-j\cdot8\cdot7}{16}}$ | $e^{\frac{-j\cdot8\cdot8}{16}}$ | $e^{\frac{-j\cdot8\cdot9}{16}}$ | $e^{\frac{-j\cdot8\cdot10}{16}}$ | $e^{\frac{-j\cdot8\cdot11}{16}}$ | $e^{\frac{-j\cdot8\cdot12}{16}}$ | $e^{\frac{-j\cdot8\cdot13}{16}}$ | $e^{\frac{-j\cdot8\cdot14}{16}}$ | $e^{\frac{-j\cdot8\cdot15}{16}}$ |
| $e^{\frac{-j\cdot9\cdot0}{16}}$ | $e^{\frac{-j\cdot9\cdot1}{16}}$ | $e^{\frac{-j\cdot9\cdot2}{16}}$ | $e^{\frac{-j\cdot9\cdot3}{16}}$ | $e^{\frac{-j\cdot9\cdot4}{16}}$ | $e^{\frac{-j\cdot9\cdot5}{16}}$ | $e^{\frac{-j\cdot9\cdot6}{16}}$ | $e^{\frac{-j\cdot9\cdot7}{16}}$ | $e^{\frac{-j\cdot9\cdot8}{16}}$ | $e^{\frac{-j\cdot9\cdot9}{16}}$ | $e^{\frac{-j\cdot9\cdot10}{16}}$ | $e^{\frac{-j\cdot9\cdot11}{16}}$ | $e^{\frac{-j\cdot9\cdot12}{16}}$ | $e^{\frac{-j\cdot9\cdot13}{16}}$ | $e^{\frac{-j\cdot9\cdot14}{16}}$ | $e^{\frac{-j\cdot9\cdot15}{16}}$ |
| $e^{\frac{-j\cdot10\cdot0}{16}}$ | $e^{\frac{-j\cdot10\cdot1}{16}}$ | $e^{\frac{-j\cdot10\cdot2}{16}}$ | $e^{\frac{-j\cdot10\cdot3}{16}}$ | $e^{\frac{-j\cdot10\cdot4}{16}}$ | $e^{\frac{-j\cdot10\cdot5}{16}}$ | $e^{\frac{-j\cdot10\cdot6}{16}}$ | $e^{\frac{-j\cdot10\cdot7}{16}}$ | $e^{\frac{-j\cdot10\cdot8}{16}}$ | $e^{\frac{-j\cdot10\cdot9}{16}}$ | $e^{\frac{-j\cdot10\cdot10}{16}}$ | $e^{\frac{-j\cdot10\cdot11}{16}}$ | $e^{\frac{-j\cdot10\cdot12}{16}}$ | $e^{\frac{-j\cdot10\cdot13}{16}}$ | $e^{\frac{-j\cdot10\cdot14}{16}}$ | $e^{\frac{-j\cdot10\cdot15}{16}}$ |
| $e^{\frac{-j\cdot11\cdot0}{16}}$ | $e^{\frac{-j\cdot11\cdot1}{16}}$ | $e^{\frac{-j\cdot11\cdot2}{16}}$ | $e^{\frac{-j\cdot11\cdot3}{16}}$ | $e^{\frac{-j\cdot11\cdot4}{16}}$ | $e^{\frac{-j\cdot11\cdot5}{16}}$ | $e^{\frac{-j\cdot11\cdot6}{16}}$ | $e^{\frac{-j\cdot11\cdot7}{16}}$ | $e^{\frac{-j\cdot11\cdot8}{16}}$ | $e^{\frac{-j\cdot11\cdot9}{16}}$ | $e^{\frac{-j\cdot11\cdot10}{16}}$ | $e^{\frac{-j\cdot11\cdot11}{16}}$ | $e^{\frac{-j\cdot11\cdot12}{16}}$ | $e^{\frac{-j\cdot11\cdot13}{16}}$ | $e^{\frac{-j\cdot11\cdot14}{16}}$ | $e^{\frac{-j\cdot11\cdot15}{16}}$ |
| $e^{\frac{-j\cdot12\cdot0}{16}}$ | $e^{\frac{-j\cdot12\cdot1}{16}}$ | $e^{\frac{-j\cdot12\cdot2}{16}}$ | $e^{\frac{-j\cdot12\cdot3}{16}}$ | $e^{\frac{-j\cdot12\cdot4}{16}}$ | $e^{\frac{-j\cdot12\cdot5}{16}}$ | $e^{\frac{-j\cdot12\cdot6}{16}}$ | $e^{\frac{-j\cdot12\cdot7}{16}}$ | $e^{\frac{-j\cdot12\cdot8}{16}}$ | $e^{\frac{-j\cdot12\cdot9}{16}}$ | $e^{\frac{-j\cdot12\cdot10}{16}}$ | $e^{\frac{-j\cdot12\cdot11}{16}}$ | $e^{\frac{-j\cdot12\cdot12}{16}}$ | $e^{\frac{-j\cdot12\cdot13}{16}}$ | $e^{\frac{-j\cdot12\cdot14}{16}}$ | $e^{\frac{-j\cdot12\cdot15}{16}}$ |
| $e^{\frac{-j\cdot13\cdot0}{16}}$ | $e^{\frac{-j\cdot13\cdot1}{16}}$ | $e^{\frac{-j\cdot13\cdot2}{16}}$ | $e^{\frac{-j\cdot13\cdot3}{16}}$ | $e^{\frac{-j\cdot13\cdot4}{16}}$ | $e^{\frac{-j\cdot13\cdot5}{16}}$ | $e^{\frac{-j\cdot13\cdot6}{16}}$ | $e^{\frac{-j\cdot13\cdot7}{16}}$ | $e^{\frac{-j\cdot13\cdot8}{16}}$ | $e^{\frac{-j\cdot13\cdot9}{16}}$ | $e^{\frac{-j\cdot13\cdot10}{16}}$ | $e^{\frac{-j\cdot13\cdot11}{16}}$ | $e^{\frac{-j\cdot13\cdot12}{16}}$ | $e^{\frac{-j\cdot13\cdot13}{16}}$ | $e^{\frac{-j\cdot13\cdot14}{16}}$ | $e^{\frac{-j\cdot13\cdot15}{16}}$ |
| $e^{\frac{-j\cdot14\cdot0}{16}}$ | $e^{\frac{-j\cdot14\cdot1}{16}}$ | $e^{\frac{-j\cdot14\cdot2}{16}}$ | $e^{\frac{-j\cdot14\cdot3}{16}}$ | $e^{\frac{-j\cdot14\cdot4}{16}}$ | $e^{\frac{-j\cdot14\cdot5}{16}}$ | $e^{\frac{-j\cdot14\cdot6}{16}}$ | $e^{\frac{-j\cdot14\cdot7}{16}}$ | $e^{\frac{-j\cdot14\cdot8}{16}}$ | $e^{\frac{-j\cdot14\cdot9}{16}}$ | $e^{\frac{-j\cdot14\cdot10}{16}}$ | $e^{\frac{-j\cdot14\cdot11}{16}}$ | $e^{\frac{-j\cdot14\cdot12}{16}}$ | $e^{\frac{-j\cdot14\cdot13}{16}}$ | $e^{\frac{-j\cdot14\cdot14}{16}}$ | $e^{\frac{-j\cdot14\cdot15}{16}}$ |
| $e^{\frac{-j\cdot15\cdot0}{16}}$ | $e^{\frac{-j\cdot15\cdot1}{16}}$ | $e^{\frac{-j\cdot15\cdot2}{16}}$ | $e^{\frac{-j\cdot15\cdot3}{16}}$ | $e^{\frac{-j\cdot15\cdot4}{16}}$ | $e^{\frac{-j\cdot15\cdot5}{16}}$ | $e^{\frac{-j\cdot15\cdot6}{16}}$ | $e^{\frac{-j\cdot15\cdot7}{16}}$ | $e^{\frac{-j\cdot15\cdot8}{16}}$ | $e^{\frac{-j\cdot15\cdot9}{16}}$ | $e^{\frac{-j\cdot15\cdot10}{16}}$ | $e^{\frac{-j\cdot15\cdot11}{16}}$ | $e^{\frac{-j\cdot15\cdot12}{16}}$ | $e^{\frac{-j\cdot15\cdot13}{16}}$ | $e^{\frac{-j\cdot15\cdot14}{16}}$ | $e^{\frac{-j\cdot15\cdot15}{16}}$ |

In table 1, sequence elements included in intersections where green boxes (simple cell sequences allocated to a first antenna) in a lengthwise direction and red boxes (basic cell sequences) in a lengthwise direction are overlapped are shown in table 2.

[Table 2]

$$
\begin{bmatrix}
e^{\frac{-j\cdot0\cdot0}{16}} & e^{\frac{-j\cdot0\cdot4}{16}} & e^{\frac{-j\cdot0\cdot8}{16}} & e^{\frac{-j\cdot0\cdot12}{16}} \\
e^{\frac{-j\cdot4\cdot0}{16}} & e^{\frac{-j\cdot4\cdot4}{16}} & e^{\frac{-j\cdot4\cdot8}{16}} & e^{\frac{-j\cdot4\cdot12}{16}} \\
e^{\frac{-j\cdot8\cdot0}{16}} & e^{\frac{-j\cdot8\cdot4}{16}} & e^{\frac{-j\cdot8\cdot8}{16}} & e^{\frac{-j\cdot8\cdot12}{16}} \\
e^{\frac{-j\cdot12\cdot0}{16}} & e^{\frac{-j\cdot12\cdot4}{16}} & e^{\frac{-j\cdot12\cdot8}{16}} & e^{\frac{-j\cdot12\cdot12}{16}}
\end{bmatrix}
$$

Meanwhile, table 2 may be represented as table 3 again.

[Table 3]

$$\begin{bmatrix} e^{\frac{-j\cdot 0\cdot 0}{4}} & e^{\frac{-j\cdot 0\cdot 1}{4}} & e^{\frac{-j\cdot 0\cdot 2}{4}} & e^{\frac{-j\cdot 0\cdot 3}{4}} \\ e^{\frac{-j\cdot 1\cdot 0}{4}} & e^{\frac{-j\cdot 1\cdot 1}{4}} & e^{\frac{-j\cdot 1\cdot 2}{4}} & e^{\frac{-j\cdot 1\cdot 3}{4}} \\ e^{\frac{-j\cdot 2\cdot 0}{4}} & e^{\frac{-j\cdot 2\cdot 1}{4}} & e^{\frac{-j\cdot 2\cdot 2}{4}} & e^{\frac{-j\cdot 2\cdot 3}{4}} \\ e^{\frac{-j\cdot 3\cdot 0}{4}} & e^{\frac{-j\cdot 3\cdot 1}{4}} & e^{\frac{-j\cdot 3\cdot 2}{4}} & e^{\frac{-j\cdot 3\cdot 3}{4}} \end{bmatrix}$$

As shown in table 3, simple cell sequences of table 2 or table 3 selected from table 1 may have the same characteristics as the basic cell sequence of FIG. 1. Inversely, cells may be distinguished by selecting simple cell sequences having the same characteristics as the basic cell sequences from the basic cell sequences.

Further, the present specification describes a DFT sequence as an example based on an assumption that characteristics of a first sequence, which distinguishes a basic cell, of the DFT sequence are the same as characteristics of a second sequence, which distinguishes a simple cell, of the DFT sequence. However, the present invention is not limited to the DFT sequence and other sequences satisfying the auto-correlation characteristics and the cross-correlation characteristics may be applied to the present invention.

For example, a random sequence may be used as the first sequence, which is a sequence for distinguishing the basic cell, and a sampled random sequence may be used as the second sequence, which is a sequence for distinguishing the simple cell. As another example, a walsh code may be used as the first sequence, which is a sequence for distinguishing the basic cell, and a sampled walsh code may be used as the second sequence, which is a sequence for distinguishing the simple cell.

Meanwhile, a case where the first sequence which is a sequence for distinguishing the basic cell is the same as the second sequence which is a sequence for distinguishing the simple cell has been described as an example, but the same effect as the above case may be achieved when the complexity of the second sequence which is a sequence for distinguishing the simple cell is lower than or at least the same as the complexity of the first sequence which is a sequence for distinguishing the basic cell even though characteristics of the two sequences are not the same.

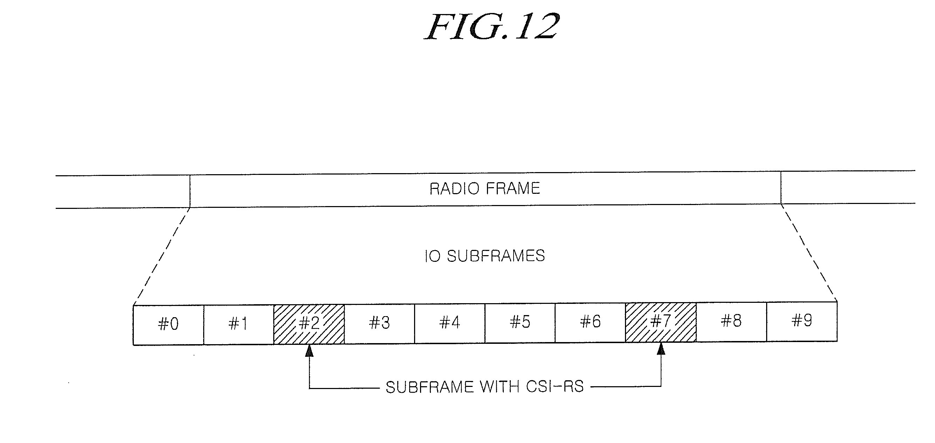

FIG. 12 illustrates structures of a frame and a subframe including a CSI-RS.

Referring to FIG. 12, a frame may include 10 subframes (subframes #0 to #9). Specific subframes of the subframes, for example, subframes #2 and #7 may include the aforementioned CSI-RS.

Each subframe, for example, in an MBSFN subframe, CSI-RSs may be allocated to resource elements forming a two-dimensional structure by a time-domain and a frequency-domain for each of a normal subframe with normal CP and a normal subframe with extended CP.

Further, although the present specification has assumed that CSI-RSs are included in two subframes #2 and #7 on the subframes, positions or the number of subframes including the CSI-RSs are not limited to the above assumption.

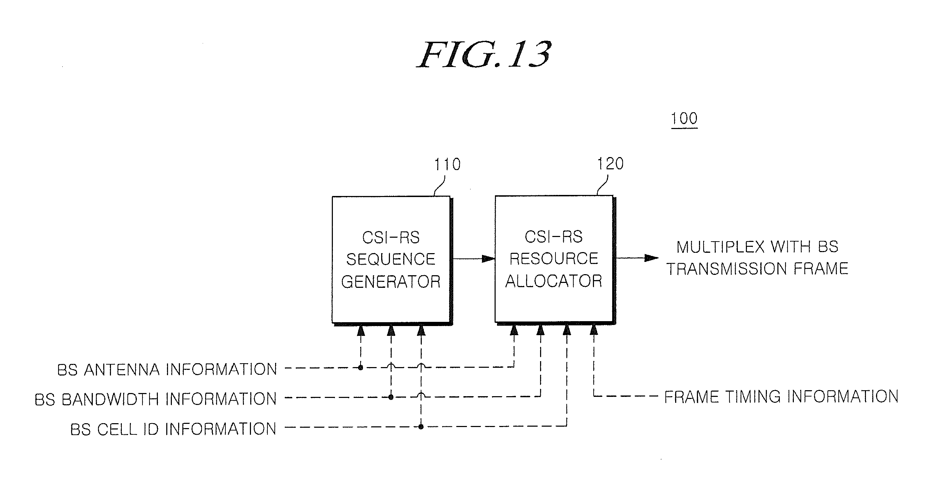

FIG. 13 is a block diagram of an apparatus for generating a CSI-RS sequence to allocate it to a resource element.

Referring to FIG. 13, a CSI-RS generator 100 for generating a CSI-RS sequence to allocate it to a resource element includes a CSI-RS sequence generator 110 and a CSI-RS resource allocator 120.

The CSI-RS sequence generator 110 receives an input of system-specific information to generate a CSI-RS sequence. Here, the system specific information may be one or more of BS (cell) information, relay node information, UE (user device) information, a subframe number, and CP sizes. Further, the BS (cell) information, for example, may be BS antenna information, BS bandwidth information, and BS cell ID information.

Accordingly, the CSI-RS sequence generator 110 uses system-specific information such as the BS antenna information and the BS bandwidth information to decide a length of the sequence, and receives an input of cell ID information to select a CSI-RS sequence of a corresponding predetermined cell ID.

Therefore, the CSI-RS sequence generator 110 can generate different CSI-RS sequences for each cell and transmit CSI-RSs for acquiring CSI of a central cell or neighboring cells.

Specifically, a method of deciding a sequence length and generating a sequence by the CSI-RS sequence generator 110 is described with reference to equation (1)/equation (2) and table 1 in a case of distinguishing the basic cell, and with reference to equation (3) and table 2 in a case of distinguishing the simple cell.

More specifically, the CSI-RS sequence generator 110 can generate a CSI-RS by using sequence *Seq_length_Basic(n),* which has a length of *NumLayerRSperRB * NumTxAntenna * NRB,* for distinguishing the basic cell as defined in equation (2).

Further, through different sequences of CSI-RSs allocated to the same resource elements, the CSI-RS sequence generator 110 does not use the aforementioned sequence for distinguishing the basic cell for CSI-RSs allocated to specific resource elements and may use a shorter sequence when distinguishing cells (cell 1 to cell 4).

For example, the *NumLayerRSperRB * NRB* number of sequences are selected randomly or through a rule set in basic cell sequences *Seq_length _ Basic (n)* for distinguishing the *NumLayerRS perRB * NumTxAntenna * NRB* number of basic cells and one element is selected from elements of each sequence randomly or through a rule set in the selected sequences, so that simple cell sequence *Seq_length_Simple* for distinguishing simple cells may be constructed.

Here, the CSI-RS sequence generator 110 can use (1) all bandwidths used in an entire system, for example, 1.4 to 100 MHz, and may use (2) parts of the bandwidths. Further, the CSI-RS sequence generator 110 can (3) divide bandwidths to repeatedly allocate the same sequence to the divided bandwidths, or (4) divide bandwidths to allocate different sequences to each of the divided bandwidths.

The CSI-RS resource allocator 120 receives an input of the system-specific information and frame timing information and allocates CSI-RSs generated by the CSI-RS sequence generator 110 to resource elements. Next, the CSI-RSs allocated to the resource elements are multiplexed with a BS transmission frame.

The CSI-RS resource allocator 120 allocates resources of an OFDM symbol (x axis) and a subcarrier position (y axis) by a predetermined rule through a method of allocating resources for CSI-RSs and multiplexes the allocated resources with a BS transmission frame at a predetermined frame timing.

That is, the CSI-RS resource allocator 120 can allocate CSI-RSs to different resource elements of a subframe including a time-domain and a frequency-domain for each of multiple antenna layers by using CSI-RS sequences generated for each cell by the CSI-RS sequence generator 110.

For example, when 8 multiple antennas (first to eighth antennas) are used, the CSI-RS resource allocator 120 can allocate CSI-RSs to resource elements in a specific pattern for each antenna layer divisible on a time-domain and a frequency-domain in order to distinguish the 8 antenna layers.

Further, example, a BS using 8 multiple antennas can group two antenna ports (for example, antennas #1 and #2, antennas #3 and #4, antennas #5 and #6, or antennas #7 and #8) into one antenna layer, and allocate CSI-RSs to resource blocks of the same antenna layer in the same specific pattern. In this case, two antenna ports forming one antenna layer transmit CSI-RSs allocated to resource blocks in the same pattern.

The CSI-RS resource allocator 120 can allocate CSI-RSs to different resource elements for each part of a plurality of antenna layers by using sequences for distinguishing the basic cell which are first sequences of the CSI-RSs, and allocate CSI-RSs to different resource elements for each different part of a plurality of antenna layers by using sequences for distinguishing the simple cell which are second sequences of the CSI-RSs.

The CSI-RS resource allocator 120 can allocate CSI-RSs to resource elements except a control information area of a subframe and resource elements to which other RSs are allocated. At this time, the control information area is an area of a subframe to which control signals of a physical layer and a higher layer (L1/L2) are transmitted and can occupy symbols 1 to 3.

Meanwhile, (1) the CSI-RS resource allocator 120 can use an evenly dividing allocation method of multiple antenna layers as a resource allocation method such that a relation between a basic cell distinguishing sequence and a simple cell distinguishing sequence is satisfied in consideration of sequence characteristics. (2) The CSI-RS resource allocator 120 can change an allocation position of a CSI-RS of each of multiple antenna layers according to a range of a cell ID and use the changed allocation position. (3) The CSI-RS resource allocator 120 does not allocate resources at all when the number of BS antennas is smaller than the certain number of antennas, and can allocate resources according to the total number of antennas when the number of BS antennas is larger than or the same as the certain number of antennas. (4) The CSI-RS resource allocator 120 does not allocate resources at all when the number of BS antennas is smaller than the certain number of antennas, and can allocate resources according to the number of added antennas when the number of BS antennas is larger than or the same as the certain number of antennas. (5) The CSI-RS can determine an allocation amount of resources in proportion to the number of antennas regardless of the number of BS antennas. (6) The CSI-RS resource allocator 120 can multiplex with a conventional BS transmission frame at a frame timing requested by a BS or a UE.

According to an embodiment of the present invention, an apparatus 100 for generating a CSI-RS sequence to allocate it to a resource element may be applied to a wireless communication system using an FODM and a MIMO, and it will be discussed in the following description. Meanwhile, the apparatus 100 for generating the CSI-RS to allocate it to the resource element can include a RS transmitting apparatus separately from other wireless communication system.

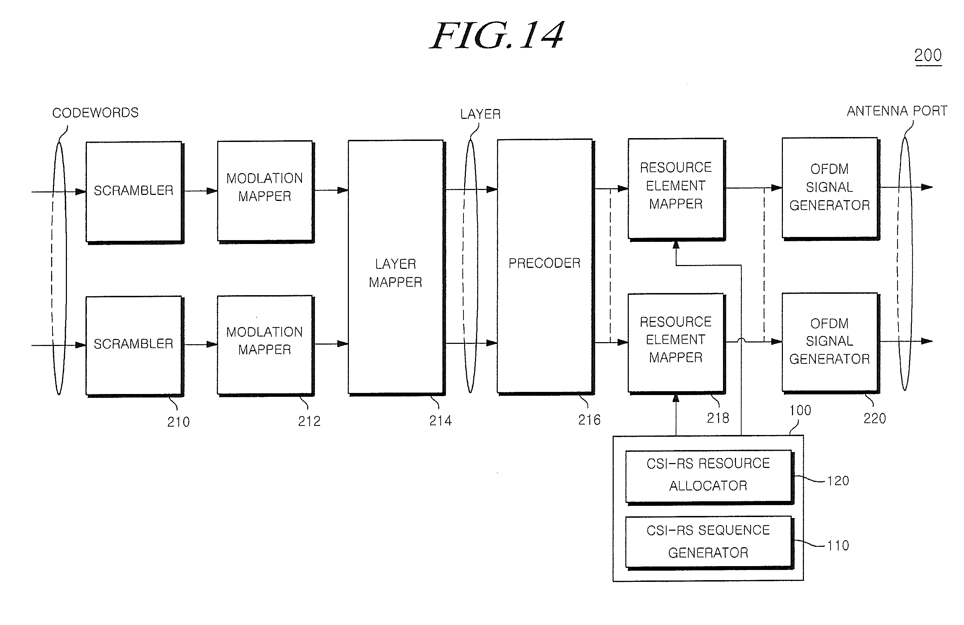

FIG. 14 illustrates a structure of generating a signal of a downlink physical channel in a wireless communication system to which embodiments of the present invention are applied.

Referring to FIG. 14, a transmitting apparatus includes a scrambler 210, a modulation mapper 212, a layer mapper 214, a precoder 216, a resource element mapper 218, and an OFDM signal generator 220, and the CSI-RS generator 100 for generating a CSI-RS sequence to allocate it to a resource element.

Bits input in a form of codewords via a channel coding in a downlink are scrambled by the scrambler 210 and then input to the modulation mapper 212.

The modulation mapper 212 modulates the scrambled bits to complex modulation symbols, and the layer mapper 214 maps the complex modulation symbols to one or a plurality of transmission layers.

Next, the precoder 216 precodes the complex modulation symbol on each transmission channel of an antenna port. Subsequently, the resource element mapper 218 maps the complex modulation symbol for each of antenna ports (antennas #1 to #8) to a corresponding resource element.

The CSI-RS generator 100 allocates CSI-RSs discriminately generated for each cell and each antenna to resources of an OFDM symbol (x axis) and a subcarrier position (y axis) through a preset rule, and accordingly the resource element mapper 128 maps the CSI-RSs and other RSs at a preset frame timing.

At this time, control signals and RSs including CSI-RSs are first allocated to resource elements and data input from the precoder 216 may then be allocated to the remaining resource elements. That is, the CSI-RS resource allocator 120 allocates sequences generated by the CSI-RS sequence generator 110 according to available resources to which the CSI-RSs will be allocated in the CSI-RS generator 100.

For example, the CSI-RS resource allocator 120 allocates CSI-RSs generated through a simple cell sequence for each of antenna resources distinguished by a TDM/FDM or allocates regardless of antenna resources.

Next, the OFDM signal generator 220 generates symbols to which each data is allocated as a complex time domain OFDM signal and each OFDM signal is transmitted through each of corresponding antenna ports.

A structure of generating a signal of a downlink physical channel according to the present specification may omit parts of elements, replace the parts of the elements with/change to other elements, or add other elements.

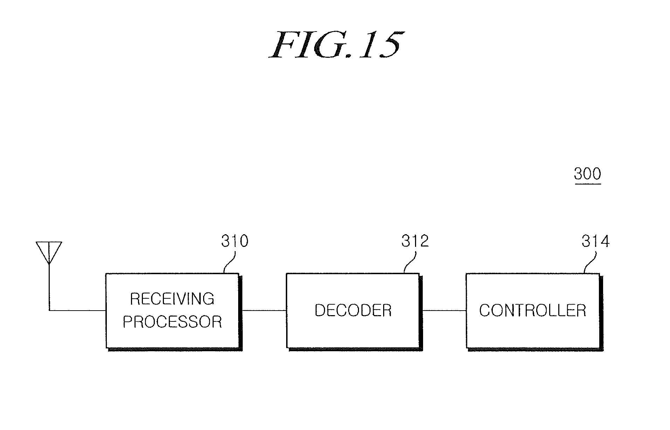

FIG. 15 illustrates a structure of a receiver in a wireless communication system.

Referring to FIG. 15, a receiving apparatus 300 in a wireless communication system includes a reception processor 310, a decoder 312, and a controller 314. At this time, the receiving apparatus 300 may be the UE 10.

A signal received through each antenna port is converted to a complex time domain signal by the reception processor 310. Further, the reception processor 310 extracts CSI-RSs for respective multiple antenna layers allocated to specific resource elements in the received signal.

The decoder 312 decodes the extracted CSI-RSs by using a sequence for distinguishing the basic cell and/or a sequence for distinguishing the simple cell.

The receiving apparatus 300 can receive information on a sequence for distinguishing the basic cell and/or a sequence for distinguishing the simple cell from the BS 20 of FIG. 1, the RS allocation apparatus 100 of FIG. 13, or a BS 200 of FIG. 14.

For example, when the receiving apparatus 300 uses the DFT sequence of equation (4) as the first sequence which is a sequence for distinguishing the basic cell, the receiving apparatus 300 can store sequences in a memory as shown in table 1.

When the receiving apparatus 300 distinguishes cells (cell 1 to cell 4), CSI-RSs allocated to specific resource elements do not use the aforementioned sequence for distinguishing the basic cell but can use a shorter sequence to distinguish cells through different sequences of CSI-RSs allocated to the same resource elements.

For example, when the receiving apparatus 300 uses the DFT sequence of equation (4) as the first sequence, which is a sequence for distinguishing the basic cell, the receiving apparatus 300 can store the second sequence, which is a sequence for distinguishing the simple cell, in a memory as shown in table 2.

Referring to FIG. 7 and FIGs. 8 to 11, when the receiving apparatus 300 distinguishes the third antenna port (antenna #3), CSI-RSs allocated to resource elements do not use the aforementioned sequence for distinguishing the basic cell, but can use a shorter sequence for distinguishing the simple cell.

For example when intensities of signals received from a specific cell are higher than intensities of signals received from neighboring cells such that the signals received from the specific cell can be distinguished, the calculation by the receiving apparatus 300 can be reduced through distinguishing cells by using the shorter sequence for distinguishing the simple cell.

Further, the receiving apparatus 300 can distinguish antennas (antennas #1 to #8) of the BS transmitting CSI-RSs through patterns of the CSI-RSs. At this time, as shown in FIG. 7 and FIGs. 8 to 11, the BSs (cell 1 to cell 4) allocate CSI-RSs for the same antennas in the same pattern. At this time, the receiving apparatus 300 can receive information on patterns of CSI-RSs for distinguishing antennas (antennas #1 to #8) of the BS transmitting the CSI-RSs from the BS 20 of FIG. 1, the RS allocation apparatus 100 of FIG. 13, or the BS 200 of FIG. 14.

The controller 314 acquires Channel State Information (CSI) on a central cell or neighbor cells through decoded CSI-RSs in a multiple antenna system including a plurality of antennas.

The receiving apparatus 300 refers to an apparatus for making a pair with the transmitting apparatus 200 in the wireless communication system described with reference to FIG. 14 and receiving a signal transmitted from the transmitting apparatus 200.

Accordingly, the receiving apparatus 300 includes elements for a signal processing of an inverse process of the transmitting apparatus 200. Therefore, parts, which have not been specifically described for the receiving apparatus 300 in the present disclosure, may be replaced with elements for a signal processing of an inverse process of the transmitting apparatus 200 in one to one correspondence.

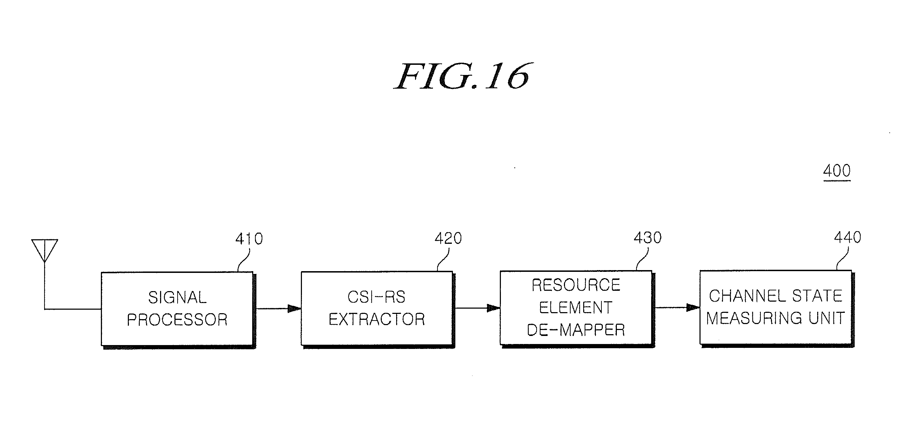

FIG. 16 specifically illustrates a receiving apparatus according to another embodiment of the present invention.

Referring to FIG. 16, a receiving apparatus 400 in a wireless communication system may include a signal processor 410, a CSI-RS extractor 420, a resource element de-mapper 430, and a channel state measuring unit 440. The signal processor 410 receives a signal through each antenna port, and the CSI-RS extractor 420 extracts only CSI-RSs for respective multiple antenna ports allocated to specific resource elements in the received signal. The resource element de-mapper 430 de-maps CSI-RSs for each antenna port in an inverse order of the aforementioned method of allocating the CSI-RSs.

For example, the CSI-RS extractor 420 identifies a grouping of two antenna ports (for example, antennas #1 and #2, antennas #3 and #4, antennas #5 and 6, and antennas #7 and 8) of 8 multiple antennas and extracts CSI-RSs allocated to the same antenna layers. Alternatively, when 8 multiple antennas are used, the CSI-RS extractor 420 extracts CSI-RSs allocated to respective antenna layers.

Further, the resource element de-mapper 430 de-maps a CSI-RS of each antenna (group) allocated to a specific resource element in a specific pattern by using information on a sequence for distinguishing a basic cell and/or a sequence for distinguishing a simple cell received from the BS.

At this time, the resource element de-mapper 430 can identify CSI-RSs of a corresponding antenna from resource elements except a control information area of a subframe and resource elements allocated to other RSs. Further, the resource element de-mapper 430 de-maps a CSI-RS of each antenna (group) allocated to a specific resource element by using a shorter sequence than the sequence for distinguishing the basic cell according to the present disclosure. The channel state measuring unit 440 acquires CSI which is channel state information for each antenna port through the de-mapped CSI-RSs.

Meanwhile, a simple cell sequence may be allocated for each antenna resource distinguished by a TDM/FDM or regardless of the antenna resource. When CSI-RSs are distinguished by the simple cell sequence, CSI-RS channel information of a corresponding cell is obtained by using a basic cell sequence of the corresponding distinguished cell. At this time, each of antenna channel information is not obtained through the simple cell sequence allocated for each antenna resource, but all of antenna information may be obtained through the conventional basic cell sequence.

So far, although embodiments of the present invention have been described with reference to FIGs. 1 to 16, the present invention is not limited thereto.

It has been described that cells are distinguished by the CDM and multiple antenna layers are distinguished by the TDM/FDM in the method of allocating CSI-RSs to a subframe in the embodiments of the present invention, and the same method or a substantially similar method may be used for other wireless communications.

In addition, since terms, such as "including," "comprising," and "having" mean that one or more corresponding components may exist unless they are specifically described to the contrary, it shall be construed that one or more other components can be included. All of the terminologies containing one or more technical or scientific terminologies have the same meanings that persons skilled in the art understand ordinarily unless they are not defined otherwise. A term ordinarily used like that defined by a dictionary shall be construed that it has a meaning equal to that in the context of a related description, and shall not be construed in an ideal or excessively formal meaning unless it is clearly defined in the present specification.

Although a preferred embodiment of the present invention has been described for illustrative purposes, those skilled in the art will appreciate that various modifications, additions and substitutions are possible, without departing from the scope and spirit of the invention as disclosed in the accompanying claims. Therefore, the embodiments disclosed in the present invention are intended to illustrate the scope of the technical idea of the present invention, and the scope of the present invention is not limited by the embodiment. The scope of the present invention shall be construed on the basis of the accompanying claims in such a manner that all of the technical ideas included within the scope equivalent to the claims belong to the present invention.

CROSS-REFERENCE TO RELATED APPLICATION

This application claims priority from and the benefit under 35 U.S.C. §119(a) of Korean Patent Application No. 10-2009-0056707 filed on June 24, 2009, which is hereby incorporated by reference for all purposes as if fully set forth herein.

**Claims**

1. A method of allocating a CSI-RS for acquiring Channel State Information (CSI) in a multiple antenna system, the method comprising:

    differently generating CSI-Reference Signal (CSI-RS) sequences for a central cell or neighboring cells according to each cell; and
    allocating a CSI-RS of each cell based on the differently generated CSI-RS sequences according to each cell to different resource elements of a subframe including a combination of a frequency domain and a time domain according to two or more antenna layers.

2. The method as claimed in claim 1, wherein differently generating of the CSI-RS sequences comprises generating a first CSI-RS sequence and a second CSI-RS sequence having a shorter length than that of the first CSI-RS sequence,
    wherein allocating of the CSI-RS comprises allocating a first CSI-RS generated by using the first CSI-RS sequence to a first resource element among resource elements corresponding to the two or more antenna layers and allocating a second CSI-RS generated by using the second CSI-RS sequence to second resource elements different from the first resource element among the resource elements corresponding to the two or more antenna layers.

3. The method as claimed in claim 2, further comprising allocating the first CSI-RS generated by using the first CSI-RS sequence and the second CSI-RS generated by using the second CSI-RS sequence to identical resource elements.

4. The method as claimed in claim 2, wherein the first CSI-RS sequence is generated through *NumLayerRSperRB * NumTxAntenna * NRB,* and the second CSI-RS sequence is generated through *NumLayerRSperRB * NRB,*
    wherein the *NumLayerRSperRB* refers to a number of resource elements per antenna layer allocated to each resource block included in a subframe, *NumTxAntenna* refers to a number of available multiple antennas by a Base Station (BS), and *NRB* refers to a number of resource blocks to which the CSI-RSs are to be allocated.

5. The method as claimed in claim 4, wherein the second CSI-RS sequence is one of first CSI-RS sequences, which are satisfied with an auto-correlation characteristic or a cross-correlation characteristic, and includes one first CSI-RS sequence selected from the first CSI-RS sequences, which are satisfied with the auto-correlation characteristic or the cross-correlation characteristic.

6. The method as claimed in claim 5, wherein the second CSI-RS sequence is a DFT (Discrete Fourier Transform) sequence.

7. The method as claimed in claim 6, wherein the second CSI-RS sequence is a DFT sequence having a 1/4 length of the first CSI-RS sequence.

8. The method as claimed in claim 7, wherein the first CSI-RS sequence corresponds to *Seq_length_Basic*(n) = {s(n, 0), s(n,1), ... , s(n, *NumLayerRSperRB * NumTxAntenna * NRB)* } (n=0, 1, *...NumLayerRSperRB * NumTxAntenna * NRB* -1).

9. The method as claimed in claim 2, wherein allocating of the CSI-RS further comprises uniformly allocating the first CSI-RS and the second CSI-RS to the resource elements corresponding to the two or more antenna layers.

10. The method as claimed in claim 9, wherein, in allocating of the CSI-RS, the first CSI-RS and the second CSI-RS are allocated to the remaining resource elements except a control information area and resource elements to which other RSs are allocated among resource elements of the subframe.

11. The method as claimed in claim 10, wherein, in allocating of the CSI-RS, each of the first CSI-RS and the second CSI-RS having different sequences according to each cell is allocated to resource elements having different time and frequency domains according to the two or more antenna layers.

12. The method as claimed in claim 5, wherein the first CSI-RS sequence and the second CSI-RS sequence are one of a random sequence and a walsh code.

**13.** The method as claimed in claim 4, wherein the first CSI-RS sequence and the second CSI-RS sequence are determined by system-specific information containing a number of available multiple antennas by the BS, bandwidth information of the BS, and cell identification (cell ID) information.

**14.** The method as claimed in claim 3, wherein the first CSI-RS and the second CSI-RS are allocated to resource elements determined in consideration of system-specific information containing a number of available multiple antennas by the BS, bandwidth information of the BS, and cell identification (cell ID) information, and frame timing information.

**15.** A method of receiving a CSI-RS for acquiring CSI in a multiple antenna system, the method comprising:

receiving information on a CSI-RS sequence for distinguishing each of a central cell or neighboring cells from a BS; and
extracting a CSI-RS of each cell from different resource elements of a subframe including a combination of a time domain and a frequency domain according to two or more antenna layers by using the received information on the CSI-RS sequence.

**16.** The method as claimed in claim 15, wherein receiving of the information on the CSI-RS sequence comprises receiving a first CSI-RS sequence and a second CSI-RS sequence having a shorter length than that of the first CSI-RS sequence, and
extracting of the CSI-RS of each cell comprises extracting a first CSI-RS generated by using the first CSI-RS sequence from a first resource element among resource elements corresponding to the two or more antenna layers, and extracting a second CSI-RS generated by using the second CSI-RS sequence from second resource elements different from the first resource element among the resource elements corresponding to the two or more antenna layers.

**17.** The method as claimed in claim 16, wherein extracting of the CSI-RS of each cell further comprises extracting the first CSI-RS generated by using the first CSI-RS sequence and the second CSI-RS generated by using the second CSI-RS sequence from identical resource elements.

**18.** The method as claimed in claim 16, wherein, in extracting of the CSI-RS of each cell, a CSI-RS is decoded by using the first CSI-RS sequence generated through $NumLayerRSperRB * NumTxAntenna * NRB$ and a CSI-RS is decoded by using the second CSI-RS sequence generated through $NumLayerRSperRB * NRB,$
wherein the $NumLayerRSperRB$ refers to a number of resource elements per antenna layer allocated to each resource block included in a subframe, $NumTxAntenna$ refers to a number of available multiple antennas by a BS, and $NRB$ refers to a number of resource blocks to which the CSI-RSs are to be allocated.

**19.** The method as claimed in claim 18, wherein the second CSI-RS sequence is one of first CSI-RS sequences, which are satisfied with an auto-correlation characteristic or a cross-correlation characteristic, and includes one first CSI-RS sequence selected from the first CSI-RS sequences, which are satisfied with the auto-correlation characteristic or the cross-correlation characteristic.

**20.** The method as claimed in claim 19, wherein the second CSI-RS sequence is a DFT (discrete Fourier Transform) sequence.

**21.** The method as claimed in claim 20, wherein the second CSI-RS sequence is a DFT sequence having a 1/4 length of the first CSI-RS sequence.

**22.** The method as claimed in claim 18, wherein the first CSI-RS sequence corresponds to $Seq\_length\_Basic$(n) = {s (n,0) s(n,1) ... , s (n, $NumLayerRSperRB * NumTxAntenna * NRB)$ } (n=0, 1, ...$NumLayerRSperRB * NumTxAntenna * NRB$ -1) .

**23.** The method as claimed in claim 16, wherein extracting of the CSI-RS of each cell further comprises uniformly extracting the first CSI-RS and the second CSI-RS from the resource elements corresponding to the two or more antenna layers.

**24.** The method as claimed in claim 16, wherein, in extracting of the CSI-RS of each cell, the first CSI-RS and the second CSI-RS are extracted from the remaining resource elements except a control information area and resource elements to which other RSs are allocated among resource elements of the subframe.

25. The method as claimed in claim 16, wherein, in extracting of the CSI-RS of each cell, a first CSI-RS and a second CSI-RS having different codes according to each cell are extracted from resource elements having different time and frequency domains according to the two or more antenna layers.

26. The method as claimed in claim 21, wherein the first CSI-RS sequence and the second CSI-RS sequence are one of a random sequence and a walsh code.

27. The method as claimed in claim 18, wherein the first CSI-RS sequence and the second CSI-RS sequence are determined by system-specific information containing a number of available multiple antennas by the BS, bandwidth information of the BS, and cell identification (cell ID) information.

28. The method as claimed in claim 18, wherein, in extracting of the CSI-RS of each cell, the first CSI-RS and the second CSI-RS are extracted from resource elements determined in consideration of the system-specific information containing the number of available multiple antennas by the BS, bandwidth information of the BS, and cell identification (cell ID) information, and frame timing information.

29. A RS transmitting apparatus for allocating a CSI-RS for acquiring CSI in a multiple antenna system, the apparatus comprising:

a CSI-RS sequence generator for differently generating CSI-Reference Signal (CRS-RS) sequences for a central cell or neighboring cells according to each cell; and
a CSI-RS resource allocator for allocating a CSI-RS of each cell based on the differently generated CSI-RS sequences according to each cell to different resource elements of a subframe including a combination of a frequency domain and a time domain according to two or more antenna layers.

30. The RS transmitting apparatus as claimed in claim 29, wherein the CSI-RS sequence generator generates a first CSI-RS sequence and a second CSI-RS sequence having a shorter length than that of the first CSI-RS sequence, and the CSI-RS resource allocator allocates a first CSI-RS generated by using the first CSI-RS sequence to a first resource element among resource elements corresponding to the two or more antenna layers and allocating a second CSI-RS generated by using the second CSI-RS sequence to second resource elements different from the first resource element among the resource elements corresponding to the two or more antenna layers.

31. The RS transmitting apparatus as claimed in claim 30, wherein the CSI-RS resource allocator allocates the first CSI-RS generated by using the first CSI-RS sequence and the second CSI-RS generated by using the second CSI-RS sequence to identical resource elements.

32. The RS transmitting apparatus as claimed in claim 30, wherein the first CSI-RS sequence is generated through *NumLayerRSperRB * NumTxAntenna * NRB,* and the second CSI-RS sequence is generated through *NumLayerRSperRB * NRB,*
wherein the *NumLayerRSperRB* refers to a number of resource elements per antenna layer allocated to each resource block included in a subframe, *NumTxAntenna* refers to a number of available multiple antennas by a Base Station (BS), and *NRB* refers to a number of resource blocks to which the CSI-RSs are to be allocated.

33. The RS transmitting apparatus as claimed in claim 32, wherein the second CSI-RS sequence is one of first CSI-RS sequences, which are satisfied with an auto-correlation characteristic or a cross-correlation characteristic, and includes one first CSI-RS sequence selected from the first CSI-RS sequences, which are satisfied with the auto-correlation characteristic or the cross-correlation characteristic.

34. The RS transmitting apparatus as claimed in claim 33, wherein the second CSI-RS sequence is a DFT (discrete Fourier Transform) sequence.

35. The RS transmitting apparatus as claimed in claim 34, wherein the second CSI-RS sequence is a DFT sequence having a 1/4 length of the first CSI-RS sequence.

36. The RS transmitting apparatus as claimed in claim 35, wherein the first CSI-RS sequence corresponds to *Seq_length_Basic*(n) = {s(n,o), s(n,1), ... , s(n, *NumLayerRSperRB * NumTxAntenna * NRB)* } (n=0, 1, *...NumLayerRSperRB * NumTxAntenna * NRB* -1).

37. The RS transmitting apparatus as claimed in claim 30, wherein the CSI-RS resource allocator uniformly allocates the first CSI-RS and the second CSI-RS to the resource elements corresponding to the two or more antenna layers.

38. The RS transmitting apparatus as claimed in claim 36, wherein the CSI-RS resource allocator allocates the first CSI-RS and the second CSI-RS to the remaining resource elements except a control information area and resource elements to which other RSs are allocated among resource elements of the subframe.

39. The RS transmitting apparatus as claimed in claim 38, wherein the CSI-RS resource allocator allocates the first CSI-RS and the second CSI-RS having different sequences according to each cell to resource elements having different time and frequency domains according to the two or more antenna layers.

40. The RS transmitting apparatus as claimed in claim 33, wherein the first CSI-RS sequence and the second CSI-RS sequence are one of a random sequence and a walsh code.

41. The RS transmitting apparatus as claimed in claim 32, wherein the first CSI-RS sequence and the second CSI-RS sequence are determined by system-specific information containing a number of available multiple antennas by the BS, bandwidth information of the BS, and cell identification (cell ID) information.

42. The RS transmitting apparatus as claimed in claim 31, wherein the first CSI-RS and the second CSI-RS are allocated to resource elements determined in consideration of system-specific information containing a number of available multiple antennas by the BS, bandwidth information of the BS, and cell identification (cell ID) information, and frame timing information.

43. An apparatus for receiving a CSI-RS for acquiring CSI in a multiple antenna system, the apparatus comprising:

a signal processor for receiving information on a CSI-RS sequence for distinguishing each of a central cell or neighboring cells from a BS; and
a CSI-RS extractor for extracting a CSI-RS of each cell from different resource elements of a subframe including a combination of a time domain and a frequency domain according to two or more antenna layers by using the received information on the CSI-RS sequence.

44. The apparatus as claimed in claim 43, wherein the signal processor receives a first CSI-RS sequence and a second CSI-RS sequence having a shorter length than that of the first CSI-RS sequence, and the CSI-RS extractor extracts a first CSI-RS generated by using the first CSI-RS sequence from a first resource element among resource elements corresponding to the two or more antenna layers, and extracts a second CSI-RS generated by using the second CSI-RS sequence from second resource elements different from the first resource element among the resource elements corresponding to the two or more antenna layers.

45. The apparatus as claimed in claim 44, wherein the CSI-RS extractor extracts the first CSI-RS generated by using the first CSI-RS sequence and the second CSI-RS generated by using the second CSI-RS sequence from identical resource elements.

46. The apparatus as claimed in claim 44, wherein the CSI-RS extractor decodes a CSI-RS by using the first CSI-RS sequence generated through *NumLayerRSperRB * NumTxAntenna * NRB* and decodes a CSI-RS by using the second CSI-RS generated through *NumLayerRSperRB * NRB,*
wherein the *NumLayerRSperRB* refers to a number of resource elements per antenna layer allocated to each resource block included in a subframe, *NumTxAntenna* refers to a number of available multiple antennas by a Base Station (BS), and *NRB* refers to a number of resource blocks to which the CSI-RSs are to be allocated.

47. The apparatus as claimed in claim 46, wherein the second CSI-RS sequence is one of first CSI-RS sequences, which are satisfied with an auto-correlation characteristic or a cross-correlation characteristic, and includes one first CSI-RS sequence selected from the first CSI-RS sequences, which are satisfied with the auto-correlation characteristic or the cross-correlation characteristic.

48. The apparatus as claimed in claim 47, wherein the second CSI-RS sequence is a DFT (discrete Fourier Transform) sequence.

**49.** The apparatus as claimed in claim 48, wherein the second CSI-RS sequence is a DFT sequence having a 1/4 length of the first CSI-RS sequence.

**50.** The apparatus as claimed in claim 46, wherein the first CSI-RS sequence corresponds to $Seq\_length\_Basic(n) = \{s(n,o), s(n,1), ... , s(n, NumLayerRSperRB * NumTxAntenna * NRB)\}$ $(n=0, 1, ...NumLayerRSperRB * NumTxAntenna * NRB -1)$.

**51.** The apparatus as claimed in claim 44, wherein the CSI-RS extractor uniformly extracts the first CSI-RS and the second CSI-RS from the resource elements corresponding to the two or more antenna layers.

**52.** The apparatus as claimed in claim 44, wherein the CSI-RS extractor extracts the first CSI-RS and the second CSI-RS from the remaining resource elements except a control information area and resource elements to which other RSs are allocated among resource elements of the subframe.

**53.** The apparatus as claimed in claim 44, wherein the CSI-RS extractor extracts a first CSI-RS and a second-RS having different codes according to said each cell from resource elements having different time and frequency domains according to the two or more antenna layers.

**54.** The apparatus as claimed in claim 49, wherein the first CSI-RS sequence and the second CSI-RS sequence are one of a random sequence and a walsh code.

**55.** The method as claimed in claim 46, wherein the first CSI-RS sequence and the second CSI-RS sequence are determined by system-specific information containing a number of available multiple antennas by the BS, bandwidth information of the BS, and cell identification (cell ID) information.

**56.** The apparatus as claimed in claim 46, wherein the CSI-RS extractor extracts the first CSI-RS and the second CSI-RS from resource elements determined in consideration of system-specific information containing a number of available multiple antennas by the BS, bandwidth information of the BS, and cell identification (cell ID) information, and frame timing information.

# FIG.1

# FIG.2

FREQUENCY
(SUBCARRIER)

FREQUENCY OFFSET
(SHELL 2)

FREQUENCY OFFSET
(SHELL 1)

TIME
(OFDM SYMBOL)

COMMON REFERENCE SIGNAL
(CRS FOR LTE-R8)

C1  CSI-RS
(2CDM + LAYER 1 FOR CELL 1)

C2  CSI-RS
(4CDM + LAYER 3 FOR CELL 1)

C3  CSI-RS
(2CDM + LAYER 1 FOR CELL 2)

C4  CSI-RS
(4CDM + LAYER 3 FOR CELL 2)

C5  CSI-RS
(6CDM + LAYER 5 FOR CELL 1)

C6  CSI-RS
(8CDM + LAYER 7 FOR CELL 1)

C7  CSI-RS
(6CDM + LAYER 5 FOR CELL 2)

C8  CSI-RS
(8CDM + LAYER 7 FOR CELL 2)

# FIG.3

FREQUENCY (SUBCARRIER)

TIME (OFDM SYMBOL)

COMMON REFERENCE SIGNAL (CRS FOR LTE-R8)

| A | B | C | D |
|---|---|---|---|
| E | F | G | H |

CSI-RS (ANTENNA)

*FIG.4*

ANTENNA #1

ANTENNA #2

ANTENNA #3

ANTENNA #4

ANTENNA #5

ANTENNA #6

ANTENNA #7

ANTENNA #8

# FIG.5

## FIG.6

ANTENNA #1

ANTENNA #2

ANTENNA #3

ANTENNA #4

ANTENNA #5

ANTENNA #6

ANTENNA #7

ANTENNA #8

EP 2 448 139 A2

EP 2 448 139 A2

# FIG.7

FREQUENCY
(SUBCARRIER)

510  512

B4 B3 B2 B1  D4 D3 D2 D1

B4 B1  D4 D1 → ANTENNA #7
A4 A1  C4 C1 → ANTENNA #8

516

F4 F1  G4 G1 → ANTENNA #5
E4 E1  A4 A1 → ANTENNA #6

D4 D1  B4 B1 → ANTENNA #3
C4 C1  H4 H1 → ANTENNA #4

G4 G1  F4 F1 → ANTENNA #1
H4 H1  E4 E1 → ANTENNA #2

TIME
(OFDM SYMBOL)

COMMON REFERENCE SIGNAL
(CRS FOR LTE-R8)

CONTROL INFORMATION ALLOCATION AREA

25

*FIG.8*

ANTENNA #1

ANTENNA #2

ANTENNA #3

ANTENNA #4

ANTENNA #5

ANTENNA #6

ANTENNA #7

ANTENNA #8

## FIG.9

ANTENNA #1

ANTENNA #2

ANTENNA #3

ANTENNA #4

ANTENNA #5

ANTENNA #6

ANTENNA #7

ANTENNA #8

*FIG.10*

ANTENNA #1

ANTENNA #2

ANTENNA #3

ANTENNA #4

ANTENNA #5

ANTENNA #6

ANTENNA #7

ANTENNA #8

*FIG.11*

ANTENNA #1

ANTENNA #2

ANTENNA #3

ANTENNA #4

ANTENNA #5

ANTENNA #6

ANTENNA #7

ANTENNA #8

EP 2 448 139 A2

## FIG.12

RADIO FRAME

IO SUBFRAMES

| #0 | #1 | #2 | #3 | #4 | #5 | #6 | #7 | #8 | #9 |
|----|----|----|----|----|----|----|----|----|----|

SUBFRAME WITH CSI-RS

# FIG.13

100

**110** CSI-RS SEQUENCE GENERATOR

**120** CSI-RS RESOURCE ALLOCATOR

MULTIPLEX WITH BS TRANSMISSION FRAME

FRAME TIMING INFORMATION

BS ANTENNA INFORMATION

BS BANDWIDTH INFORMATION

BS CELL ID INFORMATION

# FIG.14

200

CODEWORDS
LAYER
ANTENNA PORT

SCRAMBLER → MODLATION MAPPER

SCRAMBLER → MODLATION MAPPER

LAYER MAPPER

PRECODER

RESOURCE ELEMENT MAPPER → OFDM SIGNAL GENERATOR

RESOURCE ELEMENT MAPPER → OFDM SIGNAL GENERATOR

210   212   214   216   218   100   220

CSI-RS RESOURCE ALLOCATOR — 120

CSI-RS SEQUENCE GENERATOR — 110

EP 2 448 139 A2

*FIG.15*

300

310                    312                    314

| RECEIVING PROCESSOR | DECODER | CONTROLLER |

# FIG.16

400

410
SIGNAL PROCESSOR

420
CSI-RS EXTRACTOR

430
RESOURCE ELEMENT DE-MAPPER

440
CHANNEL STATE MEASURING UNIT

## REFERENCES CITED IN THE DESCRIPTION

### Patent documents cited in the description

- KR 1020090056707